# EUROPEAN PATENT SPECIFICATION

(11) **EP 3 897 030 B1**
(45) Date of publication and mention of the grant of the patent: **24.01.2024**
(21) Application number: 18944960.6
(22) Date of filing: 29.12.2018
(51) Int. Cl.: H04W 72/23, H04L 5/00, H04W 72/56

(54) **DATA SCHEDULING METHOD AND DEVICE**
DATENPLANUNGSVERFAHREN UND -VORRICHTUNG
PROCÉDÉ ET DISPOSITIF DE PLANIFICATION DE DONNÉES

(43) Date of publication of application: 20.10.2021
(73) Proprietor: Huawei Technologies Co., Ltd., Longgang District Shenzhen, Guangdong 518129 (CN)
(72) Inventor: LI, Yanbing, Shenzhen, Guangdong 518129 (CN); LIU, Jiwu, Shenzhen, Guangdong 518129 (CN); CHANG, Junren, Shenzhen, Guangdong 518129 (CN); WANG, Yuelong, Shenzhen, Guangdong 518129 (CN)
(74) Representative: Epping - Hermann - Fischer
(86) International application number: PCT/CN2018/125889
(87) International publication number: WO 2020/133539

(56) References cited:
- US-A1- 2017 332 386

## Description

### TECHNICAL FIELD

This application relates to the wireless communications field, and in particular, to a data scheduling method and apparatus.

### BACKGROUND

In a wireless communications system, before sending uplink data to a base station, a terminal receives an uplink grant (uplink grant, UL grant) from the base station. The uplink grant may be used to indicate a resource and a transmission format that are used in uplink data transmission. For uplink data transmission, a resource that can be used by the terminal is controlled by the base station. However, the terminal is still responsible for scheduling data transmitted on the resource indicated by the uplink grant.

For example, according to the 3rd generation partnership project (3rd Generation Partnership Project, 3GPP) technical specification, scheduling data on a resource indicated by an uplink grant may be implemented at a media access control (media access control, MAC) protocol layer. The terminal determines which data on logical channels is to be placed in a MAC protocol data unit (protocol data unit, PDU) and how much data is to be placed for each logical channel. Each logical channel has a priority. A smaller priority value indicates a higher priority. The terminal may select a proper logical channel based on a logical channel prioritization (logical channel prioritization, LCP) procedure in the 3GPP technical specification.

After receiving the uplink grant, the terminal needs some time to prepare to-be-sent uplink data. This part of time may be denoted as a minimum processing delay from grant reception (giant reception) to data transmission (data transmission). For a 4th generation (4th generation, 4G) long term evolution (long term evolution, LTE) system, a technical specification for the LTE system allows a terminal to have a minimum processing delay that is greater than 3 milliseconds (ms). A 5th generation (5th generation, 5G) new radio (new radio, NR) system pays more attention to a delay of a wireless communications service. Currently, a technical specification for the NR system requires that a baseline (baseline) of a minimum processing delay of a terminal is less than 1 ms. In addition, the NR system supports a plurality of types of subcarrier spacings (subcarrier spacing). An increase in a subcarrier spacing leads to a higher requirement for the minimum processing delay.

The technical specification for the NR system provides some improved technical solutions. For example, a MAC header (header) structure is updated, and a logical channel prioritization procedure is also adjusted compared with that in the LTE system. These improved technical solutions can reduce the minimum processing delay of the terminal from grant reception to data transmission. However, scheduling solutions used by the terminal internally, including scheduling data on the resource indicated by the uplink grant, may be considered as product implementation issues. These product implementation problems also have significant impact on the processing delay of the terminal, and deserve attention and research.

US 2017/0332386 A1 discloses a method for uplink transmission in shorted transmission time intervals. The method can comprise receiving, by a device comprising a processor, a first downlink control information related to scheduling a first uplink data transmission via a first transmission time interval. The method can also comprise receiving, by the device, a second downlink control information related to scheduling a second uplink data transmission via a second transmission time interval, wherein the second uplink data transmission overlaps at least a symbol with the first uplink data transmission. The method can also comprise transmitting, by the device, the first uplink data transmission or the second uplink data transmission based on prioritization determined based on a first length of the first transmission time interval and a second length of the second transmission time interval.

### SUMMARY

Embodiments of this application provide a data scheduling method and apparatus, to reduce a processing delay of a wireless communications apparatus, or reduce costs of the wireless communications apparatus. The invention is set out in the appended claims.

### BRIEF DESCRIPTION OF DRAWINGS

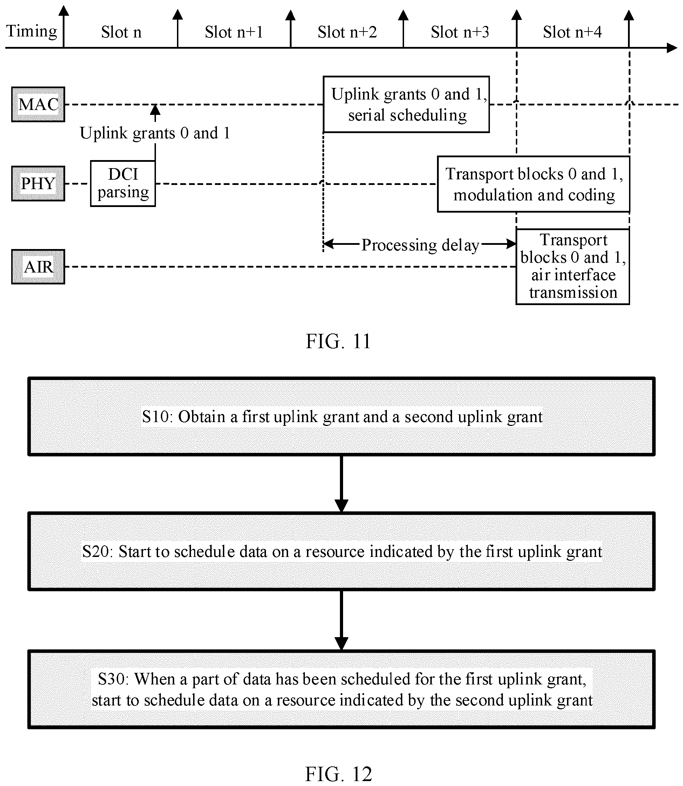

Only the embodiment shown in figure 12 is claimed.
FIG. 1 is a schematic structural diagram of a wireless communications system according to an embodiment of this application;
FIG. 2 is a schematic structural diagram of another wireless communications system according to an embodiment of this application;
FIG. 3 is a schematic diagram of a radio resource according to an embodiment of this application;
FIG. 4 is a schematic diagram of a wireless protocol architecture according to an embodiment of this application;
FIG. 5 is a schematic structural diagram of a MAC PDU according to an embodiment of this application;
FIG. 6 is a schematic diagram of mapping between different types of channels according to an embodiment of this application;
FIG. 7 is a schematic diagram of parallel uplink grants according to an embodiment of this application;
FIG. 8 is a schematic diagram of a procedure of a scheduling policy for a logical channel according to an embodiment of this application;
FIG. 9 is a schematic diagram of a status of a MAC PDU in logical channel multiplexing according to an embodiment of this application;
FIG. 10A and FIG. 10B are a schematic diagram of a status of a MAC PDU in serial scheduling for uplink grants according to an embodiment of this application;
FIG. 11 is a schematic diagram of a time sequence in serial scheduling for uplink grants according to an embodiment of this application;
FIG. 12 is a schematic flowchart of a data scheduling method according to an embodiment of this application;
FIG. 13-1A and FIG. 13-1B are a schematic diagram 1 of a status of a MAC PDU in parallel scheduling for uplink grants according to an embodiment of this application;
FIG. 13-2A and FIG. 13-2B are a schematic diagram 2 of a status of a MAC PDU in parallel scheduling for uplink grants according to an embodiment of this application;
FIG. 14 is a schematic diagram of a time sequence in parallel scheduling for uplink grants according to an embodiment of this application;
FIG. 15A and FIG. 15B are a schematic diagram of a status of a MAC PDU in interrupt scheduling for uplink grants according to an embodiment of this application; and
FIG. 16 is a schematic structural diagram of a wireless communications device according to an embodiment of this application.

It should be understood that, in the foregoing schematic structural diagrams, sizes and forms of block diagrams are for reference only, and should not constitute an exclusive interpretation of embodiments of this application. Relative locations and inclusion relationships between the block diagrams shown in the schematic structural diagrams are merely used to schematically represent structural associations between the block diagrams, rather than limiting a physical connection manner in the embodiments of this application.

### DESCRIPTION OF EMBODIMENTS

The following describes technical solutions in this application in detail with reference to embodiments and accompanying drawings. Herein, drawings 1 to 11, 14, and 15 provide examples for a better understanding. It should be understood that a system structure and a service scenario provided in the embodiments of this application are mainly intended to explain some possible implementations of the technical solutions in this application, and should not be construed as a unique limitation on the technical solutions in this application. A person of ordinary skill in the art may know that as a system evolves and a new service scenario emerges, the technical solutions provided in this application are also applicable to a same or similar technical problem.

It should be understood that the technical solutions provided in the embodiments of this application include a data scheduling method and apparatus. Principles for resolving problems by using the technical solutions are the same or similar. In descriptions in the following specific embodiments, although same content may not be repeated, it should be considered that the specific embodiments are mutually referenced and may be combined with each other.

In a wireless communications system, devices may be classified into devices that provide a wireless network service and devices that use a wireless network service. The devices that provide a wireless network service are devices that form a wireless communications network, and may be briefly referred to as network devices (network equipment) or network elements (network element). The network devices usually belong to operators (for example, China Mobile and Vodafone) or infrastructure providers (for example, China Tower), and are operated or maintained by these vendors. The network devices may be further classified into a radio access network (radio access network, RAN) device and a core network (core network, CN) device. The RAN device typically includes a base station (base station, BS).

It should be understood that the base station may also sometimes be referred to as a wireless access point (access point, AP) or a transmission reception point (transmission reception point, TRP). Specifically, the base station may be a universal NodeB (generation NodeB, gNB) in a 5G NR system or an evolved NodeB (evolutional NodeB, eNB) in a 4G LTE system. Base stations may be classified into a macro base station (macro base station) or a micro base station (micro base station) based on different physical forms or transmit power of the base stations. The micro base station is also sometimes referred to as a small base station or a small cell (small cell).

The devices that use a wireless network service are usually located on an edge of a network, and may be briefly referred to as terminals (terminal). A terminal can establish a connection to a network device, and provide a specific wireless communications service for a user based on a service of the network device. It should be understood that, because the terminal has a closer relationship with the user, the terminal is also sometimes referred to as user equipment (user equipment, UE) or a subscriber unit (subscriber unit, SU). In addition, compared with the base station that is usually placed at a fixed location, the terminal usually moves along with the user, and is also sometimes referred to as a mobile station (mobile station, MS). In addition, some network devices such as a relay node (relay node, RN) or a wireless router may also be considered as terminals because the network devices have a UE identity or belong to a user.

Specifically, the terminal may be a mobile phone (mobile phone), a tablet computer (tablet computer), a laptop computer (laptop computer), a wearable device (such as a smartwatch, a smart band, a smart helmet, or smart glasses), or other devices that have a wireless access capability, for example, various internet of things (internet of thing, IOT) devices, including various smart home devices (such as a smart meter and a smart home appliance) and smart city devices (such as a security or monitoring device, an intelligent transportation facility, and an intelligent vehicle). For ease of description, a base station and a terminal are used as an example below to describe in detail the technical solutions in the embodiments of this application.

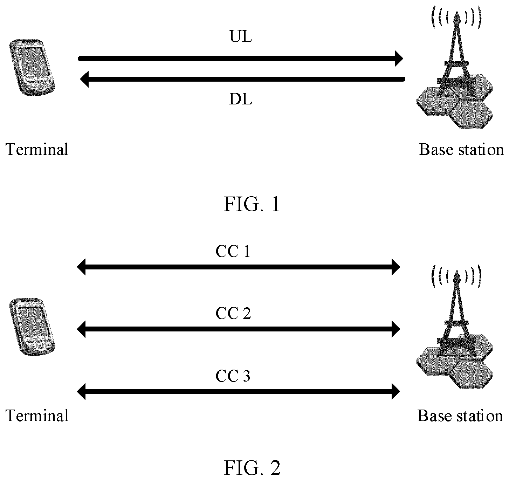

FIG. 1 is a schematic structural diagram of a wireless communications system according to an embodiment of this application. As shown in FIG. 1, the wireless communications system includes a terminal and a base station. Based on different transmission directions, a transmission link from the terminal to the base station is referred to as an uplink (uplink, UL), and a transmission link from the base station to the terminal is referred to as a downlink (downlink, DL). Similarly, data transmission over the uplink may be briefly referred to as uplink data transmission or uplink transmission, and data transmission over the downlink may be briefly referred to as downlink data transmission or downlink transmission.

In the wireless communications system, the base station may provide communication coverage for a specific geographical area by using an integrated or external antenna device. One or more terminals in the communication coverage of the base station may be connected to the base station. One base station may manage one or more cells (cell). Each cell has one identity (identification). The identity is also referred to as a cell identifier (cell identity, cell ID). From a perspective of a radio resource, a cell is a combination of a downlink radio resource and an uplink radio resource (optional) that is paired with the downlink radio resource.

It should be understood that the wireless communications system may comply with a 3GPP wireless communications standard, or may comply with another wireless communications standard, for example, a wireless communications standard in the 802 series (for example, 802.11, 802.15, or 802.20) of the Institute of Electrical and Electronics Engineers (Institute of Electrical and Electronics Engineers, IEEE). Although FIG. 1 shows only one base station and one terminal, the wireless communications system may alternatively include other quantities of terminals and base stations. In addition, the wireless communications system may further include another network device, for example, a core network device.

The terminal and the base station should know configurations predefined by the wireless communications system, including a radio access technology (radio access technology, RAT) supported by the system and a radio resource stipulated by the system, for example, a radio frequency band and a carrier. The carrier is a frequency range that complies with a stipulation of the system. The frequency range may be determined jointly based on a center frequency of the carrier (denoted as a carrier frequency) and bandwidth of the carrier. The configurations predefined by the system may be used as a part of a standard protocol for the wireless communications system, or may be determined through interaction between the terminal and the base station. Content of the standard protocol for the wireless communications system may be prestored in memories of the terminal and the base station, and/or reflected as hardware circuits or software code of the terminal and the base station.

In the wireless communications system, the terminal and the base station support one or more same RATs, for example, 5G NR, 4G LTE, or a RAT for a future evolved system. Specifically, the terminal and the base station use a same air interface parameter, a same coding scheme, a same modulation scheme, and the like, and communicate with each other based on the radio resource stipulated by the system. The air interface parameter is a parameter used to describe an air interface characteristic. In English, the air interface parameter is also sometimes referred to as numerology. The air interface parameter may include a subcarrier spacing (subcarrier spacing, SC), and may further include a cyclic prefix (cyclic prefix, CP).

The wireless communications system may support a plurality of different types of air interface parameters, and these air interface parameters may be used as a part of the standard protocol. The subcarrier spacing is used as an example. In this embodiment of this application, subcarrier spacings supported by the wireless communications system may include a subcarrier spacing of 15 kHz, and may further include a larger subcarrier spacing, for example, 30 kHz, 60 kHz, 120 kHz, or 240 kHz. In addition, the wireless communications system may simultaneously support a plurality of different types of subcarrier spacings.

FIG. 2 is a schematic structural diagram of another wireless communications system according to an embodiment of this application. The wireless communications system supports a carrier aggregation (carrier aggregation, CA) technology. As shown in FIG. 2, a terminal and a base station may aggregate three component carriers (component carrier, CC), which are denoted as a CC 1, a CC 2, and a CC 3. The CCs are carriers corresponding to different cells that participate in carrier aggregation. It should be understood that the three CCs are merely used as an example. In this embodiment of this application, the terminal and the base station may alternatively aggregate another quantity of CCs. In a Chinese context, the CC is also sometimes translated as a component carrier.

Carrier aggregation (CA) means that two or more component carriers are aggregated to provide more transmission bandwidth. Unless otherwise specified, one component carrier may correspond to one serving cell (serving cell) of the terminal. The component carrier may be briefly referred to as a carrier, and the serving cell may be briefly referred to as a cell. In a carrier aggregation scenario, the terminal and a plurality of cells may transmit data to each other at the same time. This is equivalent to that the terminal and the base station may use more radio resources. Therefore, a throughput of the terminal can be improved. Different carriers may have different air interface parameters, and correspond to different radio resources.

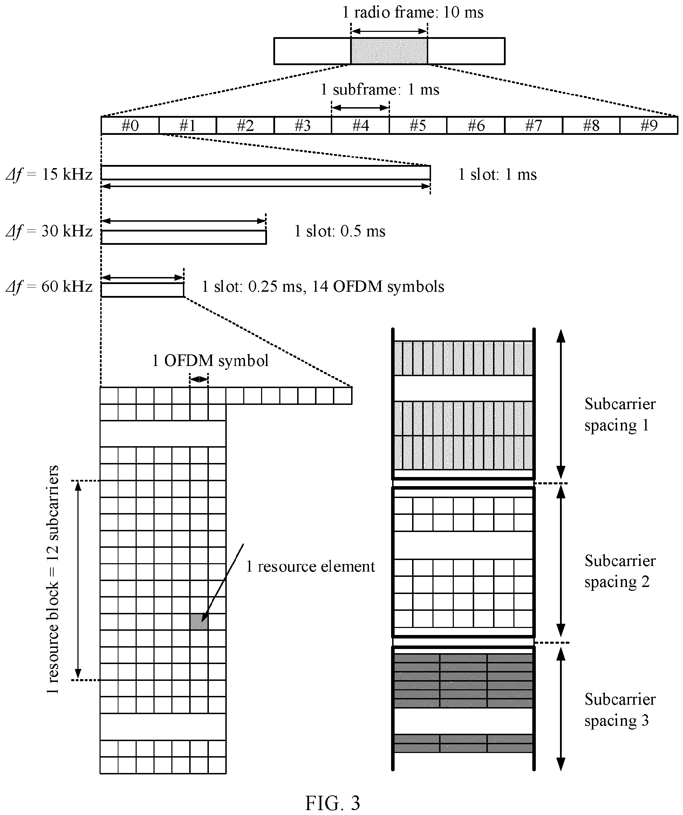

FIG. 3 is a schematic diagram of a radio resource according to an embodiment of this application. FIG. 3 shows a time-frequency resource grid (grid) supported by a wireless communications system. The time-frequency resource grid may correspond to one or more carriers. It should be understood that different carriers may correspond to different time-frequency resource grids. Different subcarrier spacings may correspond to different time-frequency resource grids. Uplink transmission and downlink transmission may also correspond to different time-frequency resource grids. In the time-frequency resource grid shown in FIG. 3, one orthogonal frequency division multiplexing (orthogonal frequency division multiplexing, OFDM) symbol (symbol, symb) is used as a time resource unit, and one subcarrier (subcarrier, SC) symbol is used as a frequency resource unit. A minimum grid in the time-frequency resource grid corresponds to one OFDM symbol and one subcarrier, and is referred to as a resource element (resource element, RE) in a 3GPP technical specification.

An NR system is used as an example. A frequency domain resource used for NR transmission (including uplink transmission and downlink transmission) is divided into a plurality of subcarriers. Twelve consecutive subcarriers may be denoted as one resource block (resource block, RB). A time domain resource used for NR transmission is divided into a plurality of radio frames (frame) whose duration is 10 ms. Each radio frame may be evenly divided into 10 subframes (subframe) whose duration is 1 ms. Each subframe is further divided into a plurality of slots (slot). Each slot includes 14 consecutive OFDM symbols. Different subcarrier spacings (denoted as *Δf*) correspond to different OFDM symbol lengths. Therefore, for subcarrier spacings with different values, a time length of one slot is also different. For example, a length of one slot corresponding to a subcarrier spacing of 15 kHz is 1 ms, a length of one slot corresponding to a subcarrier spacing of 30 kHz is 0.5 ms, and a length of one slot corresponding to a subcarrier spacing of 60 kHz is 0.25 ms.

As shown in the left part in FIG. 3, a same time resource may correspond to frequency domain resources with a same type of subcarrier spacing. As shown in the right part in FIG. 3, a same time resource may also correspond to frequency domain resources with a plurality of different types of subcarrier spacings. In frequency domain, a subcarrier spacing 1 is greater than a subcarrier spacing 2, and the subcarrier spacing 2 is greater than a subcarrier spacing 3. In time domain, an OFDM symbol length corresponding to the subcarrier spacing 1 is less than an OFDM symbol length corresponding to the subcarrier spacing 2, and the OFDM symbol length corresponding to the subcarrier spacing 2 is less than an OFDM symbol length corresponding to the subcarrier spacing 3. It should be understood that, although three types of subcarrier spacings are shown in the right part in FIG. 3, the wireless communications system may support not only the three types of subcarrier spacings, but also support two types of subcarrier spacings, or support four or more types of subcarrier spacings.

A terminal and a base station in the wireless communications system may perform mutual transmission through the radio resource shown in FIG. 3. The transmission between the terminal and the base station may comply with a wireless protocol defined by a related standard organization.

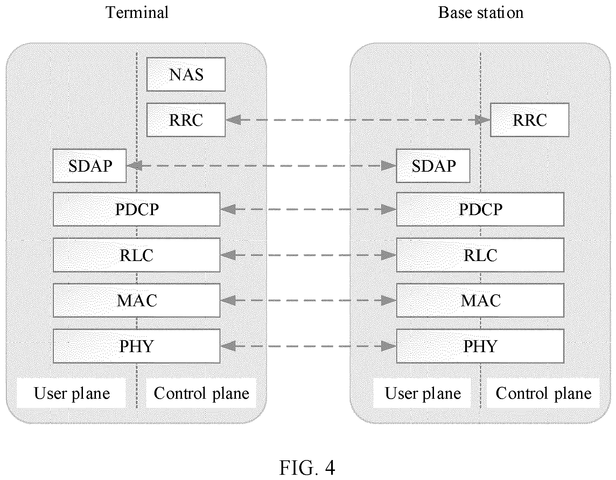

FIG. 4 is a schematic diagram of a wireless protocol architecture according to an embodiment of this application. The wireless protocol architecture may correspond to a 3GPP wireless protocol architecture.

As shown in FIG. 4, the wireless protocol architecture includes user plane protocols and control plane protocols. The user plane protocols are mainly responsible for functions related to user data transmission, and the control plane protocols are mainly responsible for functions such as connection establishment, mobility management, and security management. The user plane protocols and the control plane protocols share a plurality of same protocols. From a bottom layer to a high layer, the same protocols sequentially include a physical (physical, PHY) layer protocol, a media access control (media access control, MAC) protocol, a radio link control (radio link control, RLC) protocol, and a packet data convergence protocol (packet data convergence protocol, PDCP). In addition, the user plane protocols may further include a service data adaptation protocol (service data adaptation protocol, SDAP), and the control plane protocols further include a radio resource control (radio resource control, RRC) protocol and a non-access stratum (non-access stratum, NAS) protocol. Entities corresponding to the protocols at the layers included in the wireless protocol architecture are separately disposed inside the terminal and the base station.

The NAS protocol may be used to perform functions such as authentication (authentication), mobility management (mobility management), and security control (security control).

The RRC protocol may be used to perform functions such as broadcast of a system message, sending of a paging message, RRC connection management, cell selection, cell reselection, measurement configuration, and reporting.

The SDAP layer protocol is newly introduced into a 5G NR system, and may be used in a quality of service (quality of service, QoS) processing procedure in the 5G NR system. A terminal and a base station in a 4G LTE system, or a terminal and a base station in the 5G NR system that are connected to a 4G core network device may not use the SDAP layer protocol.

The PDCP protocol may be used to perform functions such as internet protocol (internet protocol, IP) packet header compression, encryption, and integrity protection. In addition, the PDPC protocol may be further used for functions such as PDCP data sequence numbering (sequence numbering) and in-order delivery (in-order delivery). The PDCP protocol may provide a radio bearer (radio bearer) service for an upper-layer protocol (for example, SDAP). In the terminal, each radio bearer may correspond to one PDCP entity.

The RLC protocol may be used to perform segmentation (segmentation) and retransmission processing on RLC data. The RLC protocol may provide an RLC channel service for an upper-layer protocol (for example, the PDCP protocol). In the terminal, each RLC channel (and each radio bearer) may correspond to one RLC entity. In comparison with the 4G LTE system, the RLC protocol in the 5G NR system no longer supports in-order delivery of data to an upper-layer protocol, to reduce a service delay.

The MAC protocol may be used to perform logical channel multiplexing, a hybrid automatic repeat request (hybrid automatic repeat request, HARQ), scheduling, and scheduling-related functions. The MAC protocol provides a logical channel service for an upper-layer protocol (for example, the RLC protocol), and is responsible for mapping a logical channel onto a transport channel.

The PHY protocol may be used to perform encoding/decoding, modulation/demodulation, multi-antenna mapping, mapping of a signal onto a time-frequency resource, and another typical physical layer function. The PHY protocol provides a transport channel service for an upper-layer protocol (for example, the MAC protocol) and is responsible for mapping a transport channel onto a physical channel.

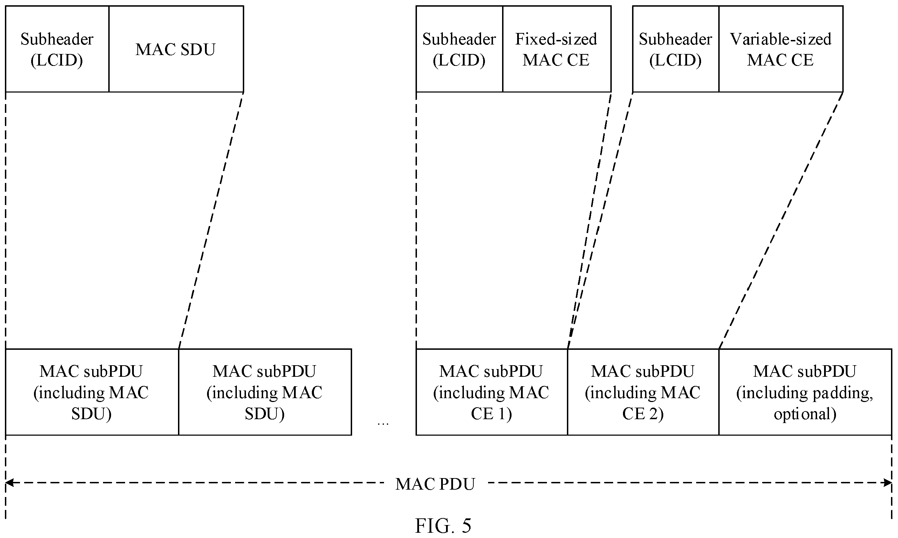

FIG. 5 is a schematic structural diagram of a MAC PDU according to an embodiment of this application. The MAC PDU may be used as an example structure of an uplink MAC PDU in a 5G NR system.

As shown in FIG. 5, one MAC PDU may include a plurality of MAC subPDUs. Each MAC subPDU may be used to carry one MAC service data unit (service data unit, SDU), one MAC control element (control element, CE), or a padding bit. One MAC SDU may carry one RLC SDU and a sequence number (sequence number, SN) of the RLC SDU. One RLC SDU may carry one PDCP SDU and an SN of the PDCP SDU. SNs of RLC SDUs and SNs of PDCP SDUs may be consecutive numbers in order of the respective SDUs.

Each MAC subPDU further includes one MAC subheader (subheader) corresponding to carried content. The MAC subheader may include a logical channel identifier (logical channel identifier, LCID) field, or another field used to indicate a configuration of the carried content (for example, a length of a MAC SDU).

In comparison with a 4G LTE system, a MAC PDU header structure in the 5G NR system is improved, to support a shorter processing delay. In the 4G LTE system, all MAC header information is placed at the beginning of a MAC PDU. This means that the MAC PDU can be assembled only after a scheduling decision is received. In a MAC protocol in the 5G NR system, a subheader of a MAC SDU is placed close to and before the MAC SDU. This means that a MAC PDU can be pre-processed before a scheduling decision is received. In addition, when carrier aggregation is used, the MAC protocol is also responsible for multiplexing and demultiplexing data on a plurality of component carriers.

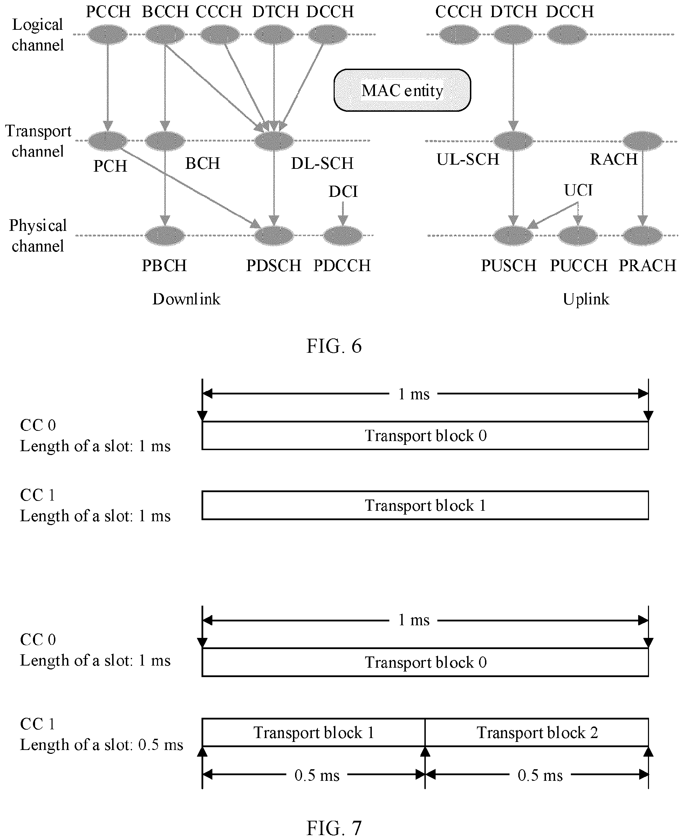

FIG. 6 is a schematic diagram of mapping between different channels in a wireless communications system according to an embodiment of this application. As shown in FIG. 6, channels in the wireless communications system may include a logical channel, a transport channel, and a physical channel. The logical channel is mapped onto a corresponding transport channel, and the transport channel is mapped onto a corresponding physical channel.

The logical channel is defined based on a type of information carried on the channel, and is usually classified as a control channel and a traffic (traffic) channel. The control channel carries control information and configuration information that are required when the wireless communications system operates, and the traffic channel carries user data. Specifically, logical channels may include a broadcast control channel (broadcast control channel, BCCH), a paging control channel (paging control channel, PCCH), a common control channel (common control channel, CCCH), a dedicated control channel (dedicated control channel, DCCH), and a dedicated traffic channel (dedicated traffic channel, DTCH).

The control channel is defined based on a specific characteristic and a specific manner that are used to transfer information carried on the channel over an air interface. Data on the transport channel may form a transport block (transport block, TB), and one transport block corresponds to one MAC PDU. Transport channels may include a broadcast channel (broadcast channel, BCH), a paging channel (paging channel, PCH), a downlink shared channel (downlink shared channel, DL-SCH), and an uplink shared channel (uplink shared channel, UL-SCH). Furthermore, a random access channel (random access channel, RACH) is defined as a transport channel, although the random access channel does not carry a transport block.

The physical channel corresponds to a group of time-frequency resources used to carry the control channel. For details of these time-frequency resources, refer to descriptions of the time-frequency resource grid shown in FIG. 3. Physical channels may include a physical downlink shared channel (physical downlink shared channel, PDSCH), a physical broadcast channel (physical broadcast channel, PBCH), a physical downlink control channel (physical downlink control channel, PDCCH), a physical uplink shared channel (physical uplink shared channel, PUSCH), and a physical uplink control channel (physical uplink control channel, PUCCH). The PDCCH and the PUCCH do not correspond to control channels, and are respectively used to carry downlink control information (downlink control information, DCI) and uplink control information (uplink control information, UCI). The DCI or the UCI provides configuration information required for downlink data transmission or uplink data transmission.

The DCI is used as an example. The DCI has a plurality of predefined formats. These predefined formats include some given information elements (information element, IE). The information element may be understood as a given field in the DCI, and a value range of the field and a meaning of each value may be predefined by the system. The DCI may be classified into two types. One type is denoted as a downlink scheduling assignment (downlink scheduling assignments), and is used to indicate a terminal to receive, demodulate, and decode information required for a DL-SCH on a carrier. The other type is denoted as an uplink scheduling grant (uplink scheduling grant), and is used to indicate, to a terminal, information such as a resource and a transmission format that are used in uplink transmission. The technical solutions provided in the embodiments of this application are applicable to scheduling of data on a resource indicated by the downlink scheduling assignment or the uplink scheduling grant. The following uses the uplink scheduling grant as an example to describe in detail the technical solutions provided in the embodiments of this application. The uplink scheduling grant may be briefly denoted as an uplink grant.

In a 5G NR system, a DCI format 0-1 or a DCI format 0-0 may be used for an uplink grant. A terminal receives uplink grants corresponding to these DCI formats, and learns of, through parsing, meanings of information elements in the DCI, to learn information such as a resource location, a transmission format, a multi-antenna configuration, and power control that are used in uplink data transmission.

In a carrier aggregation scenario, one or two uplink grants may be configured for each carrier. Each uplink grant is used to indicate uplink transmission resources on one carrier, and these transmission resources may correspond to one transport block. Different subcarrier spacings may be configured for different carriers. To enable a terminal to simultaneously transmit uplink data on a plurality of carriers, a base station may allocate a plurality of parallel uplink grants to the terminal. The plurality of parallel uplink grants may be understood as: Resources (corresponding transport blocks) indicated by these uplink grants overlap in time domain.

FIG. 7 is a schematic diagram of parallel uplink grants according to an embodiment of this application. Two carriers are used as an example in FIG. 7. A carrier 0 is denoted as a CC 0, and a carrier 1 is denoted as a CC 1.

In the upper part in FIG. 7, a length of a slot corresponding to the CC 0 and a length of a slot corresponding to the CC 1 are both 1 ms. There is one uplink grant for each of the CC 0 and the CC 1, and the uplink grants are respectively represented by using a transport block 0 and a transport block 1 corresponding to the uplink grants. As shown in the upper part in FIG. 7, when subcarrier spacings of a plurality of carriers in carrier aggregation are the same, lengths of slots corresponding to the plurality of carriers are the same, and the transport blocks on the two carriers may all overlap in time domain.

In the lower part in FIG. 7, a length of a slot corresponding to the CC 0 is 1 ms, and a length of a slot corresponding to the CC 1 is 0.5 ms. There is one uplink grant for the CC 0, and the uplink grant is represented by using a transport block 0 corresponding to the uplink grant. In this period of time, there are two uplink grants for the CC 1, and the two uplink grants are respectively represented by using a transport block 1 and a transport block 2 corresponding to the two uplink grants. As shown in the lower part in FIG. 7, when subcarrier spacings of a plurality of carriers in carrier aggregation are different, lengths of slots corresponding to the plurality of carriers are different, and a transport block on one carrier may partially overlap with a transport block on the other carrier in time domain.

As described above, the mapping from the logical channel to the control channel may be performed by a MAC entity in the terminal or the base station. A plurality of logical channels with different priorities may be multiplexed onto one transport block. One transport block corresponds to one MAC PDU. After receiving an uplink grant, the terminal first determines specific logical channels for which a resource indicated by the uplink grant is suitable to be used. After selecting appropriate logical channels, the terminal determines how many resources are allocated to each logical channel, in other words, determines how much data is scheduled for each logical channel.

For example, for each logical channel, the terminal may have the following LCP parameters: a set of subcarrier spacings allowed to be used for the logical channel, maximum duration (duration) of a physical uplink shared channel (physical uplink shared channel, PUSCH) scheduled for the logical channel, and a set of uplink component carriers (component carriers) allowed to transmit the logical channel. Only a logical channel that satisfies these parameter requirements is selected as an appropriate logical channel. In other words, the resource indicated by the uplink grant is allowed to be used for the logical channel. A logical channel selection process may be denoted as an LCP process. For more details, refer to section 5.4.3.1 in the 3GPP technical specification 38.321 V15.3.0.

Next, the terminal needs to determine how many resources are allocated to each logical channel. This process may be denoted as scheduling performed by the terminal for the logical channel. There are two policies used for scheduling performed by the terminal for the logical channel. A first scheduling policy (denoted as Policy 1) is to satisfy, in order of priorities, a prioritized bit rate (prioritized bit rate, PBR) set by a network side for each logical channel. A second scheduling policy (denoted as Policy 2) is to send data on the logical channels as much as possible in order of priorities. The terminal may first perform scheduling for the logical channels according to Policy 1. If there is a remaining resource indicated by the uplink grant, the terminal may further perform scheduling for the logical channels according to Policy 2.

Policy 1 is based on a token bucket (bucket) algorithm. A basic idea of the algorithm is as follows: Whether data on a logical channel is to be scheduled is determined based on whether a token bucket includes a token and a quantity of included tokens, and an amount of data, to be assembled into a MAC PDU, on the logical channel is controlled.

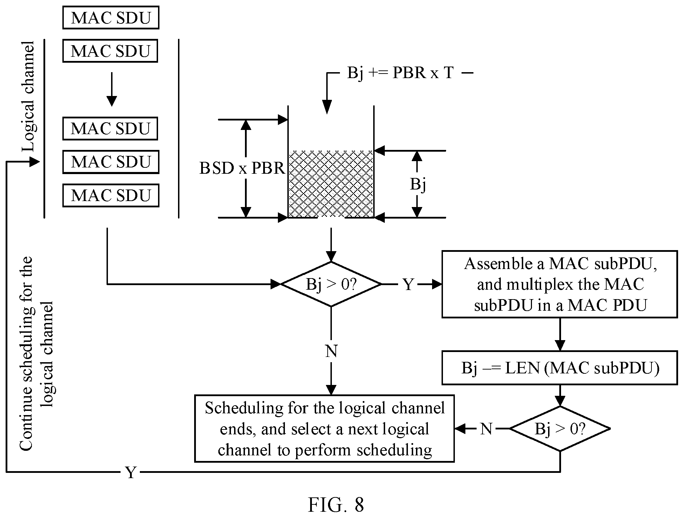

FIG. 8 is a schematic diagram of a procedure of a scheduling policy for a logical channel according to an embodiment of this application. As shown in FIG. 8, data on one logical channel may form several MAC SDUs. The logical channel may correspond to one token bucket. A depth of the token bucket is B SD, and a maximum capacity of the token bucket may be set to BSD x PBR. BSD is short for bucket size duration.

A variable Bj may be set for the logical channel, to indicate a quantity of tokens in the token bucket corresponding to the logical channel. At an interval of T, tokens are injected into the token bucket corresponding to the logical channel, in other words, Bj is increased by T x PBR. When Bj exceeds a value of B SD x PBR, Bj is no longer increased.

When performing scheduling according to Policy 1, the terminal may sequentially perform scheduling for logical channels whose Bj is greater than 0 in descending order of priorities. Each time data (for example, a MAC SDU) on a logical channel is scheduled, a corresponding size (for example, a MAC subPDU) of the data on the logical channel in the MAC PDU is subtracted from Bj, until Bj ≤ 0, until there is no data on the logical channel, or until the resource indicated by the uplink grant is used up. Bj may be a negative value, to avoid unnecessary RLC segmentation.

According to Policy 1, after a PBR requirement of a high-priority logical channel is satisfied, data on a low-priority logical channel may be scheduled. Therefore, Policy 1 can alleviate a problem that the data on the low-priority logical channel is not scheduled for a long time.

When performing scheduling according to Policy 2, the terminal may perform scheduling for all selected logical channels in descending order of priorities. In this case, Bj is not considered. The terminal allocates the resource indicated by the uplink grant to a logical channel, until there is no allocated data on the logical channel or until the resource indicated by the uplink grant is used up. According to Policy 2, when there is no data on all high-priority logical channels, and the resource indicated by the uplink grant has not been used up, a resource can be allocated to a low-priority logical channel. Therefore, the solution of Policy 2 can maximize scheduling of data on a high-priority logical channel.

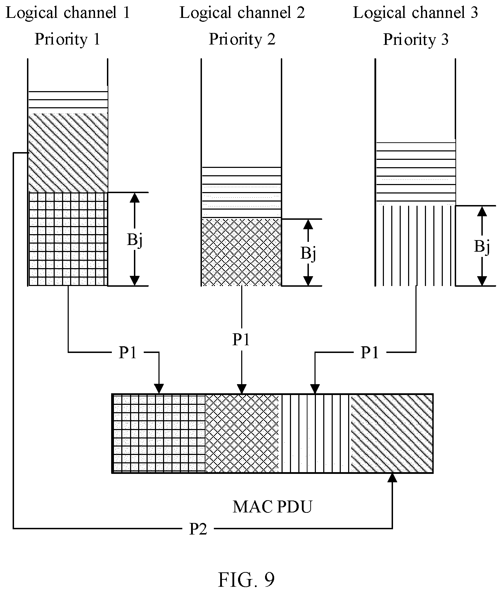

FIG. 9 is a schematic diagram of a status of a MAC PDU in logical channel multiplexing according to an embodiment of this application. FIG. 9 corresponds to one uplink grant and one MAC PDU corresponding to one transport block. A terminal selects three logical channels for the uplink grant. The three logical channels are respectively denoted as a logical channel 1, a logical channel 2, and a logical channel 3. Priorities of the three logical channels are denoted as a priority 1, a priority 2, and a priority 3.

As shown in FIG. 9, when scheduling is performed according to Policy 1 (this is denoted as P1 in FIG. 9), the terminal sequentially fetches data with a size of Bj from each logical channel in order of the priorities of these logical channels and based on a value of Bj of each logical channel, and places the data in the MAC PDU. When scheduling is performed according to Policy 2 (this is denoted as P2 in FIG. 9), the terminal fetches only a part of data from the logical channel 1 and places the data in the MAC PDU. In this case, a resource indicated by the uplink grant is used up. Then, data scheduling for the uplink grant (including the logical channel multiplexing described herein) also ends accordingly.

When there are a plurality of uplink grants, a feasible data scheduling solution is that the terminal (for example, a MAC entity) sequentially performs scheduling for all the uplink grants in specific order. Each time the MAC entity performs scheduling for one uplink grant, one MAC PDU is generated. After assembly of all parallel MAC PDU packets is complete, a physical layer protocol entity starts physical layer processing such as coding and modulation is started. This scheduling manner may be denoted as serial scheduling for the plurality of uplink grants.

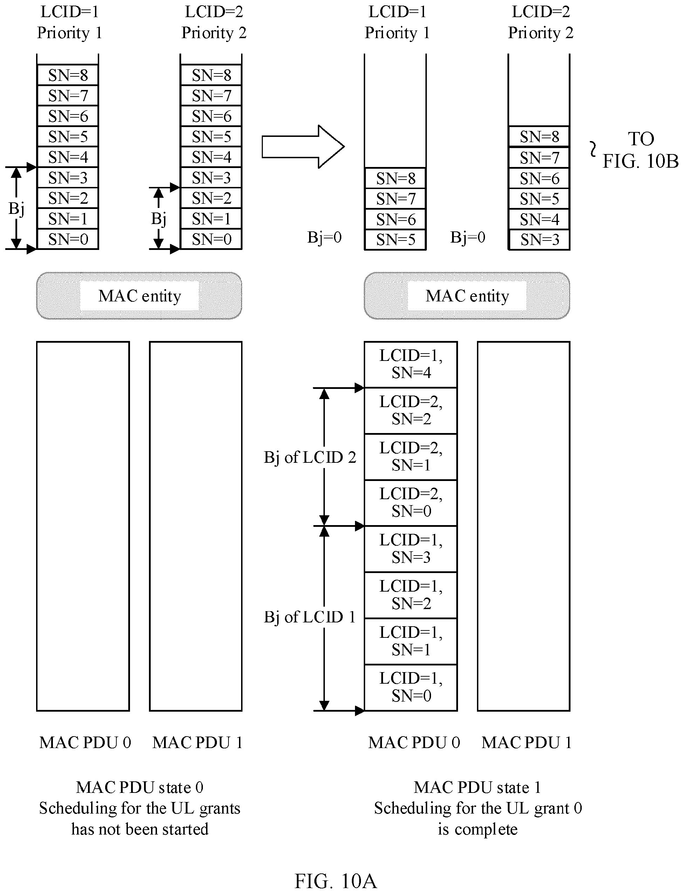

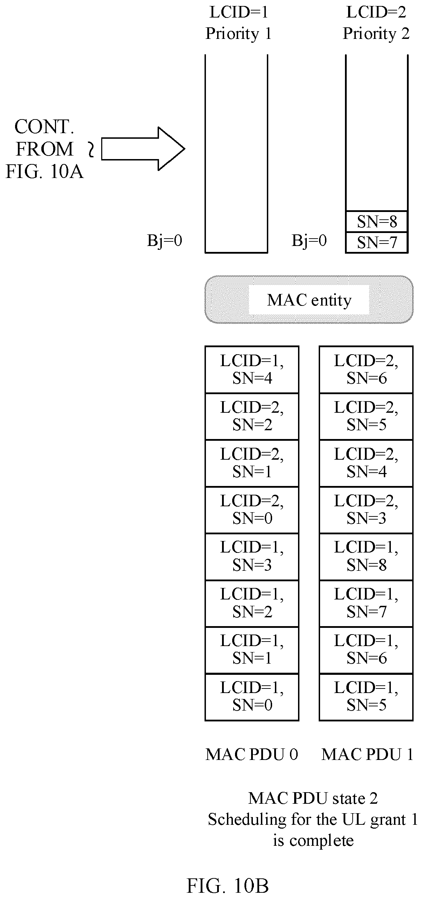

FIG. 10A and FIG. 10B are a schematic diagram of a status of a MAC PDU in serial scheduling for uplink grants according to an embodiment of this application. FIG. 10A and FIG. 10B corresponds to two uplink grants. The two uplink grants may be denoted as a UL grant 0 and a UL grant 1. The two uplink grants correspond to two MAC PDUs, time resources corresponding to the two MAC PDUs overlap, and the two MAC PDUs may be denoted as a MAC PDU 0 and a MAC PDU 1. In addition, it is assumed that there are also two logical channels denoted as LCID = 1 (or an LCID 1) and LCID = 2 (or an LCID 2), and priorities of the two logical channels are denoted as a priority 1 and a priority 2.

There are to-be-scheduled MAC SDUs on the two logical channels, and the to-be-scheduled MAC SDUs may be multiplexed in a MAC PDU, to form MAC subPDUs. The MAC SDUs on the LCID 1 and the LCID 2 each include data with a sequence number (sequence number, SN), and the sequence numbers may be denoted as SN = 1 to SN = 9. The data with the sequence number herein may be an RLC SDU, or may be a PDCP SDU. Correspondingly, the MAC SDUs each may include an RLC SN or a PDCP SN.

As shown in the left part in FIG. 10A, when scheduling has not been started for the uplink grants, a MAC entity does not start to construct a MAC PDU, and neither of the two MAC PDUs has data.

As shown in the right part in FIG. 10A, when scheduling for the UL grant 0 is complete, packet assembly of the MAC PDU 0 is complete, and packet assembly of the MAC PDU 1 has not been started. The MAC PDU 0 includes four MAC SDUs on the LCID 1 that are scheduled according to Policy 1, three MAC SDUs on the LCID 2 that are scheduled according to Policy 1, and one MAC SDU on the LCID 1 that is scheduled according to Policy 2. In this case, packet assembly of the MAC PDU 0 is complete, and the MAC PDU 1 has no data. Therefore, a physical layer cannot be notified to start coding and modulation.

As shown in the part in FIG. 10B, when scheduling for the UL grant 1 is complete, assembly of the MAC PDU 1 is also complete. The MAC PDU 1 includes four MAC SDUs on the LCID 1 and four MAC SDUs on the LCID 2. In this case, assembly of both the MAC PDU 0 and the MAC PDU 1 is complete, and the physical layer may be notified to start coding and modulation.

After assembly of the MAC PDU 1 is also complete, two MAC SDUs (SN = 7 and SN = 8) remain on the LCID 2, and can be multiplexed in another MAC PDU only after a next uplink grant is received.

FIG. 11 is a schematic diagram of a time sequence in serial scheduling for uplink grants according to an embodiment of this application. FIG. 11 corresponds to two uplink grants, and corresponds to two transport blocks. The two uplink grants are denoted as an uplink grant 0 and an uplink grant 1, and the two transport blocks are denoted as a transport block 0 and a transport block 1. MAC represents a MAC layer entity, PHY represents a physical layer entity, and AIR represents an air interface processing entity (including a radio frequency transceiver). As shown in FIG. 11, in a slot n, the physical layer entity obtains the uplink grants 0 and 1 by parsing DCI, and notifies the MAC of the uplink grants 0 and 1. In a slot n+2, the MAC layer entity starts to perform serial scheduling for the uplink grants 0 and 1. In a slot n+3, after the MAC layer entity completes the serial scheduling for the uplink grants 0 and 1, the physical layer entity starts to perform physical layer processing such as modulation and coding on the transport blocks 0 and 1. In a slot n+4, the air interface processing entity sends, over an air interface, transport blocks 0 and 1 that have undergone the physical layer processing.

A delay from the serial scheduling for the uplink grants 0 and 1 to transmission over the air interface may be denoted as a processing delay. The physical layer processing can be started only after packet assembly of parallel MAC PDUs is complete. Consequently, the processing delay in the serial scheduling for the uplink grants is relatively long. A most common manner is to improve software and hardware capabilities, to reduce the processing delay in the serial scheduling. However, this manner increases costs.

In addition, if the MAC layer receives a high-priority uplink grant when processing a low-priority uplink grant, the MAC layer can process the newly received high-priority uplink grant only after processing of the low-priority uplink grant is complete. This may cause a delay to the high-priority uplink grant. The high-priority uplink grant may be an uplink grant for which a transmission moment over the air interface is earlier than that for an uplink grant that is currently being processed. The processing delay also needs to be reduced, to alleviate such a problem that the high-priority uplink grant is delayed. However, the manner of improving software and hardware capabilities increases costs. In view of this, an embodiment of this application further provides another data scheduling solution. In this data scheduling solution, in a process in which a terminal schedules data for an uplink grant, the terminal is also allowed to schedule data for another uplink grant.

MAC layer processing is used as an example. In a process in which a MAC entity of the terminal schedules data for an uplink grant, the MAC entity assembles a MAC SDU on a logical channel into a MAC PDU corresponding to the uplink grant. When a part of MAC service data units SDUs have been assembled into the MAC PDU corresponding to the uplink grant, the MAC entity may start assembly of a MAC PDU corresponding to the another uplink grant. Then, when parts of MAC SDUs are separately assembled into a plurality of parallel MAC PDUs, the MAC entity may start the physical layer processing such as modulation and coding operations in advance on the parts of MAC SDUs that have been assembled.

Therefore, in comparison with the serial scheduling solution, in this data scheduling solution, subsequent processing can be started before assembling all MAC SDUs into the parallel MAC PDUs is complete. This helps reduce a processing delay or reduce costs.

FIG. 12 is a schematic flowchart of a data scheduling method according to an embodiment of this application. The data scheduling method is executed by a wireless communications apparatus. The wireless communications apparatus may be an entire wireless communications device, for example, a terminal, or may be a component of the wireless communications device, for example, a system chip or a communications chip of the terminal.

As shown in FIG. 12, the method includes the following steps.

Step S10: Obtain a first uplink grant and a second uplink grant.

A resource indicated by the first uplink grant overlap with, in time domain, a resource indicated by the second uplink grant. The resource indicated by the first uplink grant may correspond to a first transport block, and the resource indicated by the second uplink grant may correspond to a second transport block. The two uplink grants may be referred to as parallel uplink grants. The two transport blocks or corresponding MAC PDUs may be referred to as parallel transport blocks or parallel MAC PDUs.

The wireless communications apparatus may obtain an uplink grant in the following three manners:
Manner 1: A PHY layer parses a DCI message received over a PDCCH, to obtain the uplink grant. Then, the uplink grant obtained by the PHY layer may be sent to a MAC layer.
Manner 2: A MAC layer parses a MAC message received over a PDCCH, for example, a MAC random access response (random access response, RAR) message, to obtain the uplink grant.
Manner 3: An RRC layer obtains, from an RRC configuration message, the uplink grant that is semi-statically configured, and configures the uplink grant for a MAC layer.

Step S20: Start to schedule data on the resource indicated by the first uplink grant.

After obtaining the first uplink grant and the second uplink grant, the wireless communications apparatus selects based on a time for obtaining each of the uplink grants (a time for obtaining the second uplink grant is later than a time for obtaining the first uplink grant) and/or another factor (for example, priorities of the uplink grants or a random selection), to first serve the first uplink grant.

The starting, by the wireless communications apparatus, to schedule data on the resource indicated by the first uplink grant may include:
starting, by the wireless communications apparatus, assembly of a MAC PDU corresponding to the first transport block. Specifically, the wireless communications apparatus may first select appropriate logical channels by using the logical channel prioritization LCP procedure in the foregoing embodiment, and then schedule data on these logical channels. Specifically, the wireless communications apparatus may schedule data (a MAC SDU) for the first uplink grant by using Policy 1 and/or Policy 2, and fill the data into the MAC PDU corresponding to the first transport block.

S30: Start, when a part of data has been scheduled for the first uplink grant, to schedule data on the resource indicated by the second uplink grant.

The starting, by the wireless communications apparatus, to schedule data on the resource indicated by the first uplink grant may include:
when a part of MAC SDUs have been assembled into the MAC PDU corresponding to the first transport block, starting assembly of a MAC PDU corresponding to the second transport block.

Optionally, the data scheduling method may further include the following:
Athreshold is set for a quantity of the part of MAC SDUs that have been assembled into the MAC PDU corresponding to the first transport block. The threshold for the quantity of the part of MAC SDUs may be an upper threshold. To be specific, if the quantity of MAC SDUs that have been assembled into the MAC PDU exceeds the upper threshold, assembly of the MAC PDU corresponding to the second transport block can be started. Certainly, that the quantity of MAC SDUs that have been assembled into the MAC PDU exceeds the upper threshold may be a sufficient condition or a necessary condition. The threshold for the quantity of the part of MAC SDUs may alternatively be an upper threshold. The upper threshold should be less than a maximum quantity of MAC SDUs that can be carried in the MAC PDU. A specific value of the threshold for the quantity of the part of MAC SDUs may be related to a size of the MAC PDU or a size of the transport block. In addition, thresholds for quantities of parts of MAC SDUs for different uplink grants may be the same or different.

According to the data scheduling method shown in FIG. 12, when the wireless communications apparatus has scheduled the part of data for the first uplink grant, the wireless communications apparatus starts to schedule the data on the resource indicated by the second uplink grant before scheduling of all data for the first uplink grant is complete. Therefore, a processing delay is shortened. This effect is more significant when there are more parallel uplink grants, for example, when there is a parallel third uplink grant. In addition, the data scheduling method can reduce costs of the wireless communications apparatus while maintaining a similar processing delay.

This embodiment of this application provides a technical solution for parallel processing of a plurality of uplink grants. A terminal performs a plurality of rounds of data scheduling processing at a MAC layer for a plurality of received parallel uplink grants. The logical channel prioritization LCP procedure in the foregoing embodiment may be used in each round of data scheduling. To be specific, scheduling is first performed by using Policy 1, and then scheduling is performed by using Policy 2. However, in each round of data scheduling in this embodiment of this application, there is a limitation that only a part of resources corresponding to one or more uplink grants are used, in other words, only a part of data is scheduled for the one or more uplink grants. After one round of scheduling is performed, partial packet assembly is separately performed on a plurality of MAC PDUs corresponding to the plurality of uplink grants. In this case, the terminal may enable a physical layer to start a physical layer processing procedure such as coding and modulation in advance. Then, after each round of scheduling is complete, the physical layer may be notified to perform processing. In this way, MAC layer processing and physical layer processing may form pipeline operations. Therefore, this solution can reduce a processing delay or costs. This solution may be denoted as parallel scheduling for the plurality of uplink grants.

For step S30, the starting, when a part of data has been scheduled for the first uplink grant, to schedule data on the resource indicated by the second uplink grant includes: performing parallel scheduling for the first uplink grant and the second uplink grant; and when the part of data has been scheduled for the first uplink grant, starting, based on the parallel scheduling, to schedule the data on the resource indicated by the second uplink grant. The parallel scheduling includes a plurality of rounds of data scheduling, and parts of data are allowed to be respectively scheduled for the first uplink grant and the second uplink grant in one round of data scheduling.

Based on this, the data scheduling method may further include:
when the parts of data have been respectively scheduled for the first uplink grant and the second uplink grant in the round of data scheduling, triggering the data that has been scheduled for the first uplink grant and the second uplink grant to be transmitted on the overlapping time domain resource.

In another optional implementation, another aspect of this embodiment of this application further provides a technical solution for performing interrupt processing on a plurality of uplink grants. The logical channel prioritization LCP procedure in the foregoing embodiment may be used in scheduling for the uplink grants. To be specific, the scheduling is first performed by using Policy 1, and then performed by using Policy 2. However, in this embodiment of this application, for an uplink grant that is currently being processed (denoted as a first uplink grant), after a MAC layer schedules several (denoted as N, where N is a positive integer, and a value of N may be set according to a specific policy) MAC SDUs, the MAC layer may determine whether there is a high-priority uplink grant to be processed. If there is a high-priority uplink grant (denoted as a second uplink grant) to be processed, the MAC layer may suspend processing of the first uplink grant, store or update a scheduling context of the first uplink grant, and then start to process the second uplink grant. After processing of the second uplink grant is complete, the MAC layer restores the scheduling context of the first uplink grant, and continues to process the first uplink grant. In a scheduling process, processing of a low-priority uplink grant can be interrupted by processing of high-priority uplink grants for a plurality of times. This solution can increase a processing response speed for the high-priority grant, and reduce a processing delay or costs. This solution may be denoted as interrupt scheduling for the plurality of uplink grants.

A priority of an uplink grant may be determined based on a time for transmitting a transport block corresponding to the uplink grant over an air interface. For example, the resource indicated by the first uplink grant corresponds to the first transport block, and the resource indicated by the second uplink grant corresponds to the second transport block. That a priority of the second uplink grant is higher than a priority of the first uplink grant may include: An end time for transmitting the second transport block over the air interface is earlier than an end time for transmitting the first transport block over the air interface.

In addition, for step S30, the starting, when a part of data has been scheduled for the first uplink grant, to schedule data on the resource indicated by the second uplink grant may include:
when the part of data has been scheduled for the first uplink grant, starting, based on priorities of the uplink grants, to schedule the data on the resource indicated by the second uplink grant, where the priority of the second uplink grant is higher than the priority of the first uplink grant, and a time for obtaining the second uplink grant is later than a time for obtaining the first uplink grant.

Based on the foregoing solution, the data scheduling method may further include:
when a part of or all data has been scheduled for the second uplink grant, triggering the data that has been scheduled for the first uplink grant and the second uplink grant to be transmitted on the overlapping time domain resource.

The transmitting, on the overlapping time domain resource, the data that has been scheduled for the first uplink grant and the second uplink grant includes: performing physical layer processing on the data that has been scheduled for the first uplink grant and the second uplink grant; and
sending, over the air interface, the data that has been scheduled for the first uplink grant and the second uplink grant and that has undergone the physical layer processing.

Based on the foregoing solution, the data scheduling method may further include:
when the part of data has been scheduled for the first uplink grant, suspending scheduling of the data on the resource indicated by the first uplink grant, and updating a scheduling context of the first uplink grant.

### Implementation 1: Parallel scheduling for a plurality of uplink grants

To record an intermediate status of the scheduling processing, a wireless communications apparatus may set one scheduling context for each uplink grant. Each scheduling context may store the following content: a remaining uplink resource size (denoted as ResourceLeft), a size of data to be scheduled in each round of data scheduling (recorded as Schedule Size), and a list of selected logical channels. The ScheduleSize may be the foregoing threshold for the quantity of the part of the MAC SDUs, or may be an absolute quantity of bytes.

For a parallel scheduling algorithm used for the plurality of uplink grants, refer to the following steps:
Step 1: The wireless communications apparatus (for example, a MAC layer) selects, based on a transmission time over an air interface that is indicated by an uplink grant, the plurality of uplink grants on which parallel processing needs to be performed. The wireless communications apparatus may sort, according to a specific policy, these uplink grants on which parallel processing needs to be performed. For example, these uplink grants are sorted based on a time for obtaining each of these uplink grants or priorities of these uplink grants.
Step 2: The wireless communications apparatus initializes a scheduling context of each selected uplink grant.
Step 2.1: Initialize a remaining resource size to an uplink grant resource size.
Step 2.2: Set, according to a specific policy, a size of data to be scheduled.
Step 2.3: Select a corresponding logical channel for the uplink grant according to an LCP procedure, and store the selected logical channel in a logical channel list.
Step 3: The wireless communications apparatus selects one of the uplink grants in order, and if a remaining resource size corresponding to the uplink grant can still be used to schedule at least one MAC SDU:
   Step 3.1: Set a variable ResourceUsed, where ResourceUsed indicates a used resource size, and an initial value of ResourceUsed is 0.
   Step 3.2: Fetch a MAC SDU from a logical channel based on the stored logical channel list, and add a MAC subheader to the MAC SDU, to form a MAC subPDU.

If there are enough remaining resources, RLC segmentation should be avoided. For details of fetching a MAC SDU from a logical channel, refer to descriptions of Policy 1 and/or Policy 2. For more details, refer to descriptions in section 5.4.3.1.3 in the 3GPP technical specification 38.321.

Step 3.3: A size of the MAC subPDU is S, the remaining resources size is updated as: ResourceLeft = ResourceLeft - S, and the used resource size is updated as: ResourceUsed = ResourceUsed + S.

Step 3.4: Repeat steps 3.2 and 3.3 until one of the following conditions is satisfied, and select a next uplink grant. Condition 1: The remaining resource size is not enough to schedule one MAC SDU. In this case, processing of the uplink grant is complete.

Condition 2: An actual used resource size is greater than or equal to a specified size of data to be scheduled in each round of data scheduling.

To avoid RLC segmentation, a used resource size in each round of data scheduling may be greater than the specified size of data to be scheduled in each round of data scheduling.

Step 4: Repeat step 3 until each selected uplink grant is processed once.

Step 5: Repeat steps 3 and 4 until processing of all selected uplink grants is complete and corresponding MAC PDUs are formed.

Step 1 and step 2 are some data scheduling preparation operations, step 3 and step 4 implement one round of data scheduling, and repeating steps 3 and 4 in step 5 implements a plurality of rounds of data scheduling. Step 3 represents data scheduling for one uplink grant in one round of scheduling, and step 4 represents data scheduling for other parallel uplink grants in the round of scheduling.

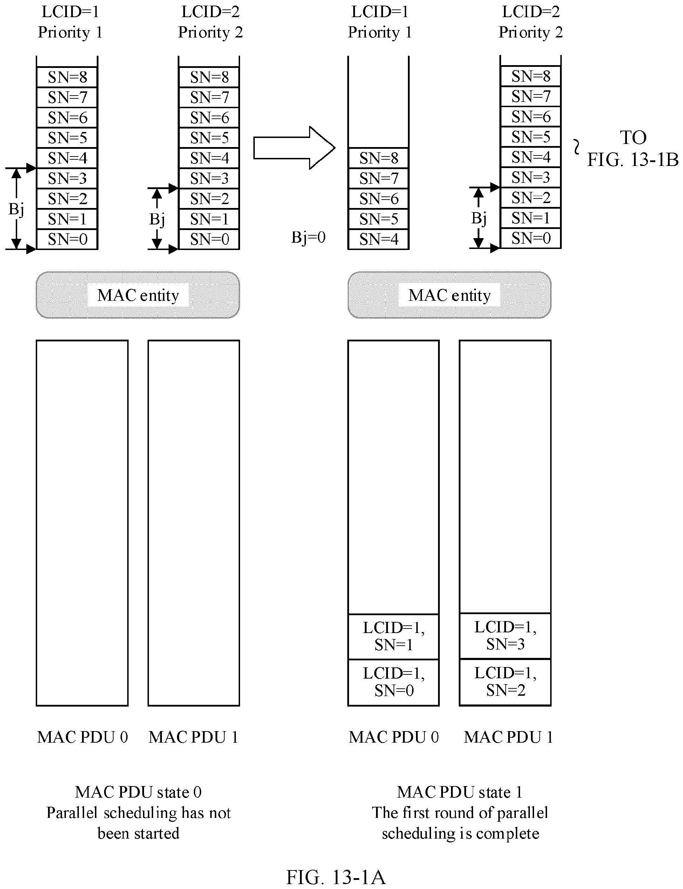

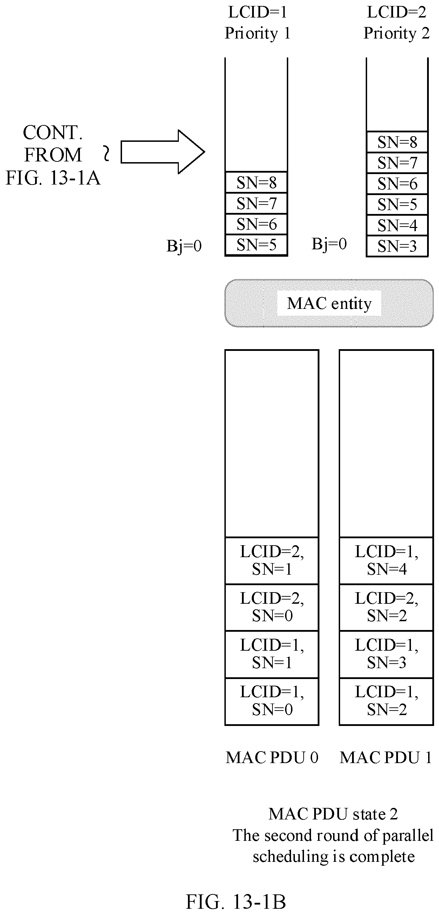

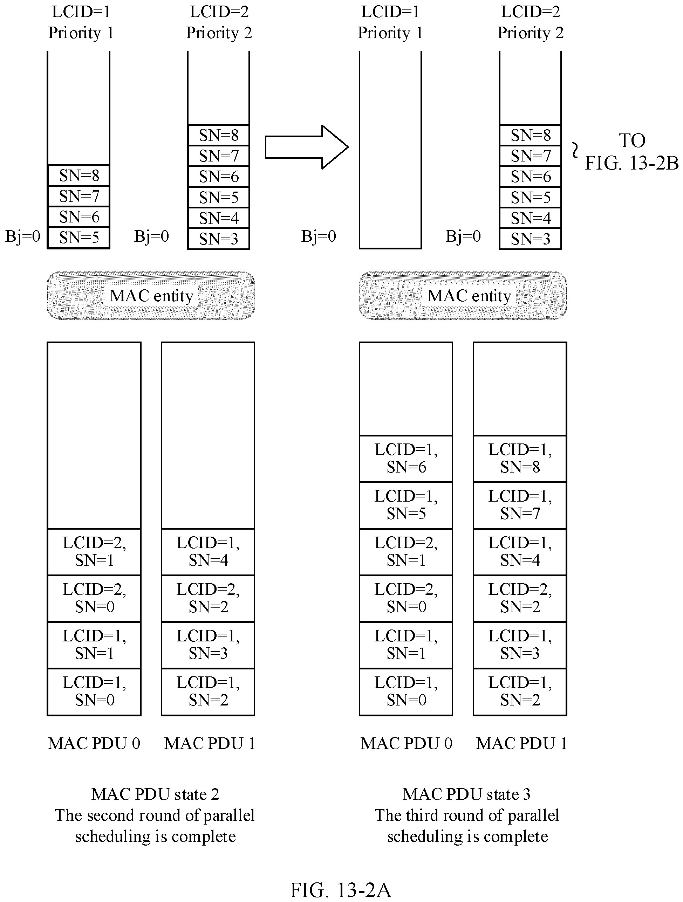

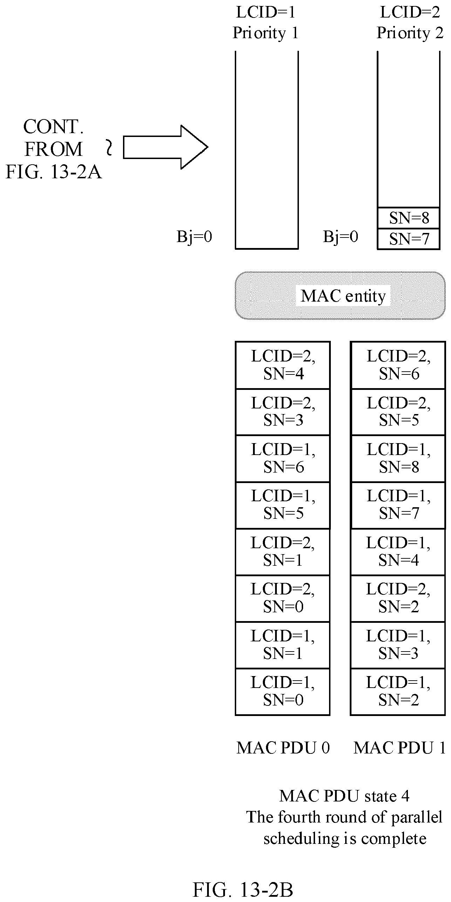

FIG. 13-1A and FIG. 13-1B is a schematic diagram 1 of a status of a MAC PDU in parallel scheduling for uplink grants according to an embodiment of this application. FIG. 13-2A and FIG. 13-2B are a schematic diagram 2 of a status of a MAC PDU in parallel scheduling for uplink grants according to an embodiment of this application.

Similar to FIG. 10A and FIG. 10B, FIG. 13-1AandFIG. 13-1B, and FIG. 13-2AandFIG. 13-2B each also correspond to two uplink grants, and the two uplink grants are denoted as a UL grant 0 and a UL grant 1. The two uplink grants correspond to two MAC PDUs, time resources corresponding to the two MAC PDUs overlap, and the two MAC PDUs are denoted as a MAC PDU 0 and a MAC PDU 1. In addition, it is also assumed that there are two logical channels, and the two logical channels are denoted as LCID = 1 (or an LCID 1) and LCID = 2 (or an LCID 2), and have a priority level 1 and a priority level 2, respectively.

There are to-be-scheduled MAC SDUs on the two logical channels, and the to-be-scheduled MAC SDUs may be multiplexed in a MAC PDU, to form MAC subPDUs. The MAC SDUs on the LCID 1 and the LCID 2 each include data with a sequence number (sequence number, SN), and the sequence numbers are denoted as SN = 1 to SN = 9. The data with the sequence number herein may be an RLC SDU, or may be a PDCP SDU. Correspondingly, the MAC SDUs each may include an RLC SN or a PDCP SN.

In the parallel scheduling for the two uplink grants, it is assumed that a lower threshold for a quantity of a part of MAC SDUs for each of the two uplink grants is two. It should be understood that, that the lower threshold for the quantity of the part of MAC SDUs herein is two is merely used as an example, and the lower threshold may have other values in this embodiment of this application. The lower thresholds for the two uplink grants may alternatively be different.

As shown in the left part in FIG. 13-1A, when the parallel scheduling has not been started for the uplink grants, a wireless communications apparatus (for example, a MAC entity) does not start assembly of the MAC PDUs, and therefore neither of the two MAC PDUs has data.

As shown in the right part in FIG. 13-1A, when the first round of parallel scheduling is complete, the MAC PDU 0 includes two MAC SDUs (SN = 0 and SN = 1) on the logical channel 1, and the MAC PDU 1 includes two MAC SDUs (SN = 2 and SN = 3) on the logical channel 1. In this case, scheduling of all data corresponding to Bj of the logical channel 1 is complete. Because both the MAC PDU 0 and the MAC PDU 1 have data, a physical layer may be notified to perform processing. Certainly, the physical layer may alternatively be notified to perform processing after more data is accumulated, for example, the data is enough for one or more physical layer code blocks (code block, CB).

As shown in the part in FIG. 13-1B, when the second round of parallel scheduling is complete, the MAC PDU 0 further includes two MAC SDUs (SN = 0 and SN = 1) on the logical channel 2, and the MAC PDU 1 includes one MAC SDU (SN = 2) on the logical channel 2 and one MAC SDU (SN = 4) on the logical channel 1. This is because data corresponding to Bj of the logical channel 2 includes only three MAC SDUs. After scheduling of the three MAC SDUs is complete, data on the logical channel 1 restarts to be scheduled according to Policy 1.

As shown in the right part in FIG. 13-2A, when the third round of parallel scheduling is complete, the MAC PDU 0 further includes two MAC SDUs (SN = 5 and SN = 6) on the logical channel 1, and the MAC PDU 1 further includes two MAC SDUs (SN = 7 and SN = 8) on the logical channel 1. In this case, all the data on the logical channel 1 has been scheduled, and there are remaining resources corresponding to the uplink grants. Therefore, data on the logical channel 2 may continue to be scheduled.

As shown in the part in FIG. 13-2B, when the fourth round of parallel scheduling is complete, the MAC PDU 0 further includes two MAC SDUs (SN = 3 and SN = 4) on the logical channel 2, and the MAC PDU 1 further includes two MAC SDUs (SN = 5 and SN = 6) on the logical channel 2.

In this case, there are two remaining MAC SDUs (SN = 3 and SN = 4) for the data on the logical channel 2. However, all resources corresponding to the uplink grants have been allocated, and therefore the parallel scheduling ends.

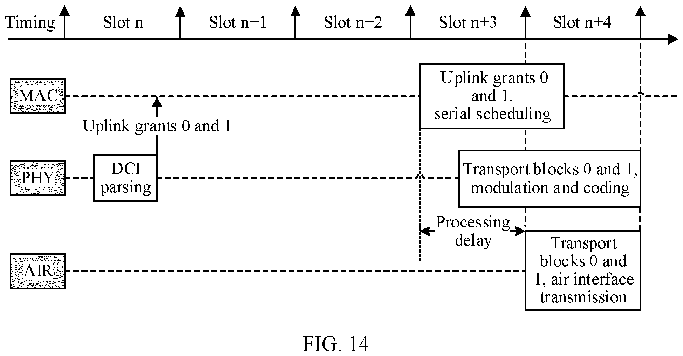

FIG. 14 is a schematic diagram of a time sequence in parallel scheduling for uplink grants according to an embodiment of this application. FIG. 14 also corresponds to two uplink grants, and corresponds to two transport blocks. The two uplink grants are denoted as an uplink grant 0 and an uplink grant 1, and the two transport blocks are denoted as a transport block 0 and a transport block 1. MAC represents a MAC layer entity, PHY represents a physical layer entity, and AIR represents an air interface processing entity (including a radio frequency transceiver). As shown in FIG. 14, in a slot n, the physical layer entity obtains the uplink grants 0 and 1 by parsing DCI, and notifies the MAC of the uplink grants 0 and 1. In a slot n+3, the MAC layer entity starts to perform parallel scheduling for the uplink grants 0 and 1. In a slot n+3, when the MAC layer entity completes partial scheduling for the uplink grants 0 and 1, the physical layer entity may start to perform physical layer processing such as modulation and coding on the transport blocks 0 and 1. In a slot n+4, the air interface processing entity sends, over an air interface, transport blocks 0 and 1 that have undergone the physical layer processing.

A delay from the parallel scheduling for the uplink grants 0 and 1 to transmission over the air interface may also be denoted as a processing delay. The physical layer processing can be started before packet assembly of all parallel MAC PDUs is complete. In this way, MAC layer processing and physical layer processing may form pipeline operations. Therefore, a processing delay in such parallel scheduling for the uplink grants is relatively short.

### Implementation 2: Interrupt scheduling for a plurality of uplink grants

To record an intermediate status of the scheduling processing, a wireless communications apparatus may set one scheduling context for each uplink grant. Each scheduling context may store the following content: a remaining uplink resource size (denoted as ResourceLeft), a size of data to be scheduled in interrupt scheduling (recorded as N), and a list of selected logical channels. N may be the foregoing threshold for the quantity of the part of MAC SDUs.

For an interrupt scheduling algorithm used for the plurality of uplink grants, refer to the following steps:
Step 1: The wireless communications apparatus (for example, a MAC layer) initializes a scheduling context of a low-priority uplink grant.
Step 1.1: Initialize a remaining resource size to an uplink grant resource size.
Step 1.2: Set N according to a specific policy.
Step 1.3: Select a corresponding logical channel for the uplink grant according to an LCP rule, and store the selected logical channel in a logical channel list.
Step 2: If the remaining resource size corresponding to the low-priority uplink grant can still be used to schedule at least one MAC SDU:
   Step 2.1: Set a variable n, where n indicates a quantity of MAC SDUs that have been scheduled, and an initial value of n is 0.
   Step 2.2: Fetch a MAC SDU from a logical channel based on the stored logical channel list, and add a MAC subheader to the MAC SDU, to form a MAC subPDU.

If there are enough remaining resources, RLC segmentation should be avoided. For details of fetching a MAC SDU from a logical channel, refer to descriptions of Policy 1 and/or Policy 2. For more details, refer to descriptions in section 5.4.3.1.3 in the 3GPP technical specification 38.321.

Step 2.3: A size of the MAC subPDU is S, the remaining resource size is updated as: ResourceLeft = ResourceLeft - S, and the quantity of MAC SDUs that have been scheduled is updated as: n = n + 1.

Step 2.4: Repeat steps 2.2 and 2.3 until one of the following conditions is satisfied, and determine whether there is a high-priority uplink grant to be processed.

Condition 1: The remaining resource size is not enough to schedule one MAC SDU.

Condition 2: n is greater than or equal to N.

Step 3: If there is a high-priority uplink grant to be processed:
Step 3.1: Select a corresponding logical channel for the high-priority uplink grant according to an LCP rule.
Step 3.2: Fetch a MAC SDU from a logical channel based on the list of selected logical channels, and add a MAC subheader to the MAC SDU, to form a MAC subPDU.

If there are enough remaining resources, RLC segmentation should be avoided. For details of fetching a MAC SDU from a logical channel, refer to descriptions of Policy 1 and/or Policy 2. For more details, refer to descriptions in section 5.4.3.1.3 in the 3GPP technical specification 38.321.

Step 3.3: Repeat step 3.2 until processing of the high-priority uplink grant is complete and a MAC PDU is formed.

Step 4: Repeat steps 2 and 3 until processing of the low-priority uplink grant is complete and a MAC PDU is formed.

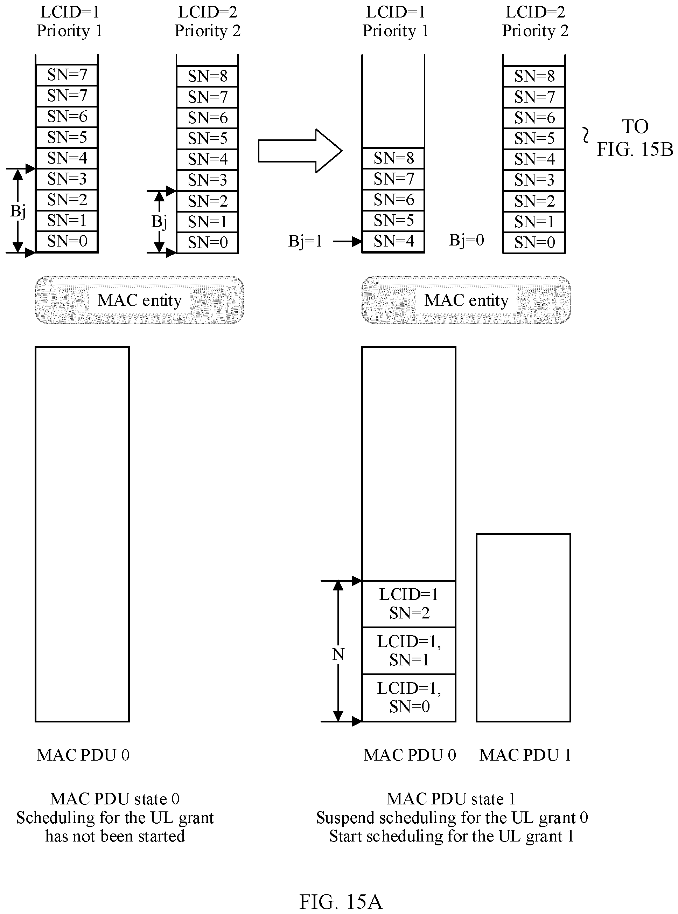

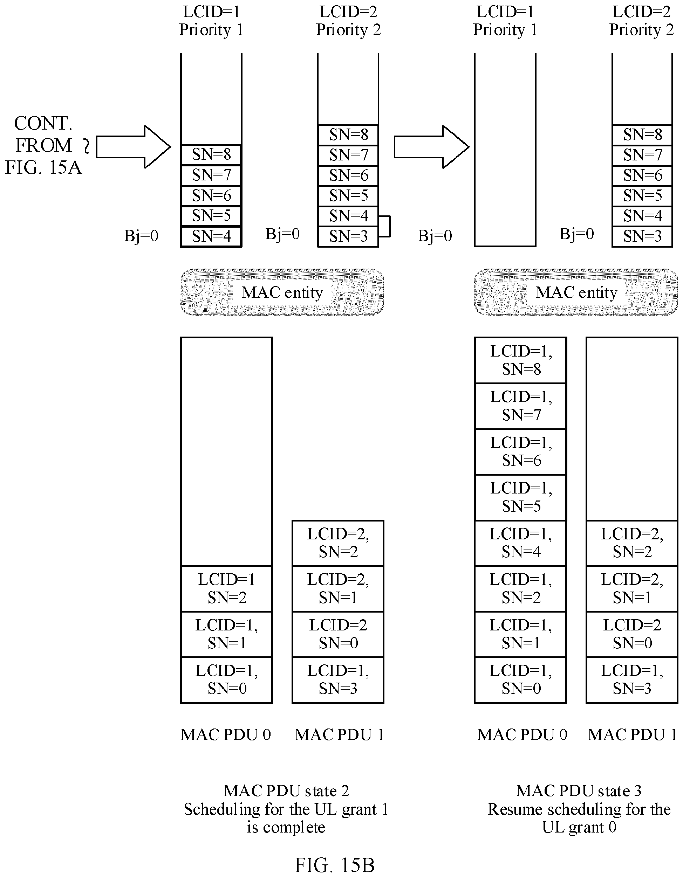

FIG. 15A and FIG. 15B is a schematic diagram of a status of a MAC PDU in interrupt scheduling for uplink grants according to an embodiment of this application. In FIG. 15A and FIG. 15B, at the beginning, there is an uplink grant that is denoted as a UL grant 0. In a process of performing scheduling for the UL grant 0, another high-priority uplink grant is received, and is denoted as a UL grant 1. Then, the scheduling for the UL grant 0 is suspended, and scheduling for the UL grant 1 is started. After the scheduling for the UL grant 1 is complete, the scheduling for the UL grant 0 is resumed.

The two uplink grants correspond to two MAC PDUs, time resources corresponding to the two MAC PDUs partially overlap, and the two MAC PDUs are denoted as a MAC PDU 0 and a MAC PDU 1. An end time for transmitting the MAC PDU 1 over an air interface is earlier than an end time for transmitting the MAC PDU 0 over the air interface. In addition, it is also assumed that there are two logical channels, and the two logical channels are denoted as LCID = 1 (or an LCID 1) and LCID = 2 (or an LCID 2), and have a priority level 1 and a priority level 2, respectively.

There are to-be-scheduled MAC SDUs on the two logical channels, and the to-be-scheduled MAC SDUs may be multiplexed in a MAC PDU, to form MAC subPDUs. The MAC SDUs on the LCID 1 and the LCID 2 each include data with a sequence number (sequence number, SN), and the sequence numbers are denoted as SN = 1 to SN = 9. The data with the sequence number herein may be an RLC SDU, or may be a PDCP SDU. Correspondingly, the MAC SDUs each may include an RLC SN or a PDCP SN.

In the interrupt scheduling for the uplink grants, it is assumed that the size N of data that has been scheduled before the interrupt scheduling is three MAC SDUs. It should be understood that the three MAC SDUs herein are merely used as an example, and there may be other values in this embodiment of this application.

As shown in the first part in FIG. 15A, when there is only one uplink grant, and the interrupt scheduling has not been started, a wireless communications apparatus (for example, a MAC entity) does not start assembly of a MAC PDU, and the MAC PDU 0 has no data.

As shown in the second part in FIG. 15A, after three MAC SDUs have been scheduled for the UL grant 0, the scheduling for the UL grant 0 is suspended. In a process of performing the scheduling for the UL grant 0, if the high-priority UL grant 1 is received, the scheduling for the UL grant 1 is started. In this case, the MAC PDU 0 includes MAC SDUs (SN = 0, SN = 1, and SN = 2) on the logical channel 1, and the MAC PDU 1 has no data.

As shown in the third part in FIG. 15B, when the scheduling for the UL grant 1 is complete, the MAC PDU 1 includes one MAC SDU (SN = 3) on the logical channel 1 and three MAC SDUs (SN = 0, SN = 1, and SN = 2) on the logical channel 2. Then, the scheduling for the UL grant 0 is resumed.

As shown in the fourth part in FIG. 15B, after the scheduling for the UL grant 0 is resumed, the MAC PDU may further include five MAC SDUs (SN = 4 to SN = 8) on the logical channel 1. In this case, there are six remaining MAC SDUs (SN = 3 to SN = 8) for data on the logical channel 2. However, all resources corresponding to the uplink grants have been allocated, and therefore the scheduling ends.

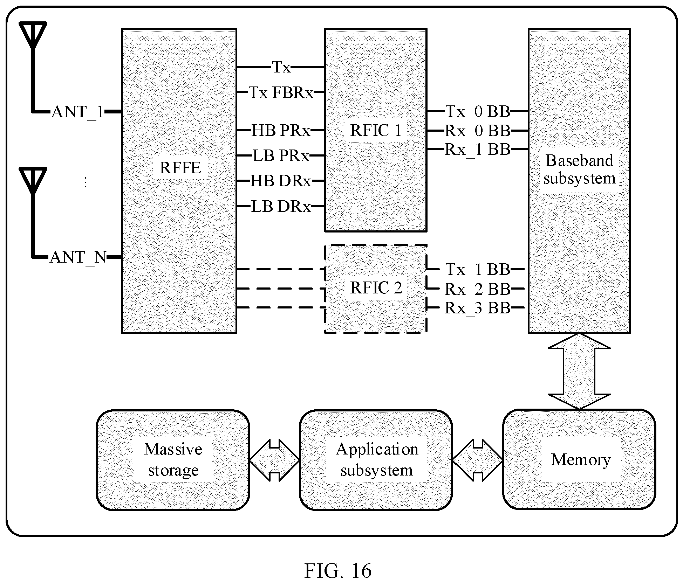

FIG. 16 is a schematic structural diagram of a wireless communications device according to an embodiment of this application. The wireless communications device or a component (for example, a communications chip or a system chip) in the wireless communications device may be configured to implement the foregoing data scheduling method. As shown in FIG. 16, the wireless communications device may include an application subsystem, a memory (memory), massive storage (massive storage), a baseband subsystem, a radio frequency integrated circuit (radio frequency integrated circuit, RFIC), a radio frequency front end (radio frequency front end, RFFE) component, and an antenna (antenna, ANT). These components may be coupled to each other by using various interconnection buses or in other electrical connection manners.

In FIG. 16, ANT_1 represents a first antenna, and ANT_N represents an N^{th} antenna. Tx represents a transmit path, Rx represents a receive path, and different numbers represent different paths. FBRx represents a feedback receive path, PRx represents a primary receive path, and DRx represents a diversity receive path. BB represents a baseband. HB represents a high band, LB represents a low band, and HB or LB indicate that a band is comparatively high or low. It should be understood that marks and components in FIG. 16 are merely used for illustration, and merely used as a possible implementation. This embodiment of this application further includes another implementation.

The application subsystem may be used as a main control system or a main computing system of the wireless communications device, and is configured to: run a main operating system and an application program, manage software and hardware resources of the entire wireless communications device, and provide a user operation interface for a user. The application subsystem may include one or more processing cores. Different cores may also have different capabilities. For example, dominant frequencies are different. Each core may have a dedicated cache, and a plurality of cores may also share a cache. In addition, the application subsystem may further include driver software related to another subsystem.

The baseband processing subsystem may include one or more processing cores, an analog-to-digital converter component, a hardware accelerator (hardware accelerator, HAC), a cache, and the like. Because physical layer processing is relatively time-consuming, a physical layer processor may be implemented by using a relatively independent processor or an HAC. It should be understood that a type and a quantity of these electronic components are not limited in this embodiment of this application. The analog-to-digital converter component includes an analog-to-digital converter (analog to digital converter, ADC) that converts an analog signal into a digital signal, and a digital-to-analog converter (digital to analog converter, DAC) that converts a digital signal into an analog signal.

The baseband processor may be configured to extract useful information or data bits from a digital signal from a base station, or convert information or data bits from the application subsystem into a digital signal to be sent to the base station. The information or data bits may be data that represents user data or control information such as a voice, a text, or a video. Specifically, the baseband processor may implement baseband signal processing operations such as modulation and demodulation, coding and decoding. In addition, different radio access technologies, for example, 5G NR and 4G LTE, usually have baseband signal processing operations that are not all the same. Therefore, a plurality of processing cores or a plurality of HACs may be included, to support convergence of a plurality of mobile communications modes.

The hardware accelerator may be configured to implement some sub-functions that have relatively high processing overheads, for example, assembly and parsing of a data packet (data packet), encryption and decryption of the data packet, and the like. These sub-functions may alternatively be implemented by a processor with a general function. However, if performance or costs are considered, it may be more appropriate to use the hardware accelerator to implement these sub-functions. Therefore, a type of a hardware accelerator and a quantity of hardware accelerators may be specifically selected based on a requirement. In a specific implementation, the hardware accelerator may be implemented by using one or a combination of a field programmable gate array (field programmable gate array, FPGA) and an application-specific integrated circuit (application specified integrated circuit, ASIC). Certainly, one or more processing cores may also be used in the hardware accelerator.

The baseband processor is also sometimes referred to as a baseband processing chip, and the RFIC is also sometimes referred to as a radio frequency processing chip. The baseband processor and the RFIC jointly form a communications subsystem. A radio frequency subsystem is mainly configured to: process a radio frequency signal, run a communications operating system and communications function software, manage software and hardware resources of the communications subsystem, and provide a wireless communications function for a user.

The antenna, the RFFE, an RFIC 1 (and an optional RFIC 2) in FIG. 16 may all be considered as belonging to the radio frequency processing subsystem. Specifically, the radio frequency subsystem may include electronic components such as the antenna, an antenna switch, an antenna tuner, a low-noise amplifier, a power amplifier, a frequency mixer, an oscillator, a filter, and a processor, to provide a receive path (receive path) and a transmit path (transmit path) The receive path is configured to: receive a radio frequency signal through the antenna, perform processing (for example, amplification, filtering, and down-conversion) on the radio frequency signal to obtain an intermediate frequency signal or a baseband signal, and transfer the intermediate frequency signal or the baseband signal to the baseband subsystem. The receive path is configured to: receive an intermediate frequency signal or a baseband signal from the baseband subsystem, perform processing (for example, up-conversion, amplification, and filtering) on the intermediate frequency signal or the baseband signal to obtain a radio frequency signal, and finally radiate the radio frequency signal into space through the antenna.

It should be understood that, in this embodiment of this application, each processing core of the wireless communications device may represent one processor. The processor may be a general-purpose processor, or may be a processor designed for a specific field. For example, the processor may be a CPU, or may be a digital signal processor (digital signal processor, DSP). If necessary, the processor may alternatively be a micro control unit (micro control unit, MCU), a graphics processing unit (graphics processing unit, GPU), an image signal processor (image signal processing, ISP), an audio signal processor (audio signal processor, ASP), and various processors used for artificial intelligence (artificial intelligence, AI) applications, including but not limited to a neural network processor (neural network processing unit, NPU), a tensor processing unit (tensor processing unit, TPU), and a processor that is referred to as an AI engine.

In actual application, based on a requirement of an application scenario, the wireless communications device may use a combination of different quantities and different types of processing cores. In addition, function division into the radio frequency subsystem and the baseband subsystem in the communications subsystem may further be adjusted. For example, some functions of the radio frequency subsystem are integrated into the baseband subsystem, or some functions of the baseband subsystem are integrated into the radio frequency subsystem.

In an implementation, the radio frequency subsystem may include an independent antenna, an independent radio frequency front end (RF front end, RFFE) component, and an independent radio frequency processing chip. The radio frequency processing chip is also sometimes referred to as a receiver (receiver), a transmitter (transmitter), or a transceiver (transceiver). The antenna, the radio frequency front end component, and the radio frequency processing chip can be manufactured and sold independently. Certainly, the radio frequency subsystem may alternatively use different components or different integration manners based on power consumption and performance requirements. For example, some components belonging to the radio frequency front end are integrated into the radio frequency processing chip.

In another implementation, the baseband subsystem may be used as an independent chip, and the chip may be referred to as a modem (modem). A hardware component of the baseband subsystem may be manufactured and sold as a modem. Because the baseband processor is a core component in wireless communication, the modem (modem) is also sometimes referred to as a baseband chip or a baseband processor. In another implementation, the baseband subsystem may be further integrated into an SoC chip, and is manufactured and sold as an SoC chip. In addition, software components of the baseband subsystem may be built in the hardware component before delivery, may be imported from another non-volatile memory into the hardware component after delivery, or may be updated and upgraded in an online manner through a network.

The memory may be classified into a volatile memory (volatile memory) and a non-volatile memory (non-volatile memory, NVM). The volatile memory is a memory whose stored data is lost after power supply interruption occurs. Currently, the volatile memory is mainly a random access memory (random access memory, RAM), including a static random access memory (static RAM, SRAM) and a dynamic random access memory (dynamic RAM, DRAM). The non-volatile memory is a memory whose stored data is not lost even if power supply interruption occurs. Common non-volatile memories include a read only memory (read only memory, ROM), an optical disc, a magnetic disk, various memories based on a flash memory (flash memory) technology, and the like. The volatile memory may be selected as the memory, and the non-volatile memory, for example, a flash memory, may be selected as the massive storage.

In the embodiments of this application and the accompanying drawings, the terms "first", "second", "third", and the like are intended to distinguish between similar objects but do not necessarily indicate a specific order or sequence. In addition, the terms "include", "have", and any variant thereof are intended to indicate non-exclusive inclusion, for example, include a series of steps or units. Methods, systems, products, or devices are not necessarily limited to those steps or units that are literally listed, but may include other steps or units that are not literally listed or that are inherent to such processes, methods, products, or devices.

It should be understood that in this application, "at least one" means one or more, and "a plurality of" means two or more. The term "and/or" is used to describe an association relationship for describing associated objects, and indicates that three relationships may exist. For example, "A and/or B" may represent the following three cases: Only A exists, only B exists, and both A and B exist, where A and B may be singular or plural. The character "/" generally indicates an "or" relationship between the associated objects. The term "at least one of the following" or a similar expression thereof means any combination of the items, including any combination of singular items (pieces) or plural items (pieces). For example, at least one of a, b, or c may indicate a, b, c, "a and b", "a and c", "b and c", or "a, b, and c", where a, b, and c may be singular or plural.

It should be understood that sequence numbers of the foregoing processes do not mean an execution sequence in this application. The execution sequence of the processes should be determined based on functions and internal logic of the processes, and should not be construed as any limitation on the implementation processes of the embodiments of this application. The term "couple" mentioned in this application is used to express interworking or mutual interaction between different components, and may include a direct connection or an indirect connection by using another component.

All or some of the foregoing embodiments of this application may be implemented by using software, hardware, firmware, or any combination thereof. When the software is used for implementation, all or some of the embodiments may be implemented in a form of a computer program product. The computer program product includes one or more computer instructions. When the computer program instructions are loaded and executed on a computer, the procedures or functions according to the embodiments of this application are all or partially generated. The computer may be a general-purpose computer, a dedicated computer, a computer network, or another programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable or an optical fiber) or wireless (for example, infrared, radio, or microwave) manner. The computer-readable storage medium may be any usable medium accessible by a computer, or a data storage device, such as a server or a data center, integrating one or more usable media. The usable medium may be a magnetic medium, for example, a floppy disk, a hard disk, and a magnetic tape; or may be an optical medium, for example, a DVD; or may be a semiconductor medium, for example, a solid-state drive (Solid State Disk, SSD).

## Claims

1. A data scheduling apparatus, comprising:
an interface unit, configured to obtain a first uplink grant and a second uplink grant, wherein a resource indicated by the first uplink grant overlaps with, in time domain, a resource indicated by the second uplink grant; and
a processing unit, configured to: start to schedule data on the resource indicated by the first uplink grant, and start, when a part of data has been scheduled for the first uplink grant, to schedule data on the resource indicated by the second uplink grant, wherein
the processing unit is further configured to: perform parallel scheduling for the first uplink grant and the second uplink grant, and when the part of data has been scheduled for the first uplink grant, start, based on the parallel scheduling, to schedule the data on the resource indicated by the second uplink grant, wherein
the parallel scheduling comprises a plurality of rounds of data scheduling, and parts of data are allowed to be respectively scheduled for the first uplink grant and the second uplink grant in a round of data scheduling.

2. The apparatus according to claim 1, wherein
the processing unit is further configured to: when the parts of data have been respectively scheduled for the first uplink grant and the second uplink grant in the round of data scheduling, trigger the data that has been scheduled for the first uplink grant and the second uplink grant to be transmitted on the overlapping time domain resource.

3. The apparatus according to claim 1, wherein
the processing unit is configured to: when the part of data has been scheduled for the first uplink grant, start, based on priorities of the uplink grants, to schedule the data on the resource indicated by the second uplink grant, wherein
a priority of the second uplink grant is higher than a priority of the first uplink grant, and a time for obtaining the second uplink grant is later than a time for obtaining the first uplink grant.

4. The apparatus according to claim 3, wherein
the processing unit is further configured to: when a part of or all data has been scheduled for the second uplink grant, trigger the data that has been scheduled for the first uplink grant and the second uplink grant to be transmitted on the overlapping time domain resource.

5. A data scheduling method, comprising:
obtaining (S10) a first uplink grant and a second uplink grant, wherein a resource indicated by the first uplink grant overlaps with, in time domain, a resource indicated by the second uplink grant;
starting (S20) to schedule data on the resource indicated by the first uplink grant; and
starting (S30), when a part of data has been scheduled for the first uplink grant, to schedule data on the resource indicated by the second uplink grant, wherein
the starting, when a part of data has been scheduled for the first uplink grant, to schedule data on the resource indicated by the second uplink grant comprises:
performing parallel scheduling for the first uplink grant and the second uplink grant, and when the part of data has been scheduled for the first uplink grant, starting, based on the parallel scheduling, to schedule the data on the resource indicated by the second uplink grant, wherein
the parallel scheduling comprises a plurality of rounds of data scheduling, and parts of data are allowed to be respectively scheduled for the first uplink grant and the second uplink grant in a round of data scheduling.

6. The method according to claim 5, further comprising:
when the parts of data have been respectively scheduled for the first uplink grant and the second uplink grant in the round of data scheduling, triggering the data that has been scheduled for the first uplink grant and the second uplink grant to be transmitted on the overlapping time domain resource.

7. The method according to claim 5, further comprising:
the starting, when a part of data has been scheduled for the first uplink grant, to schedule data on the resource indicated by the second uplink grant comprises:
when the part of data has been scheduled for the first uplink grant, starting, based on priorities of the uplink grants, to schedule the data on the resource indicated by the second uplink grant, wherein
a priority of the second uplink grant is higher than a priority of the first uplink grant, and a time for obtaining the second uplink grant is later than a time for obtaining the first uplink grant.

8. The method according to claim 7, further comprising:
when a part of or all data has been scheduled for the second uplink grant, triggering the data that has been scheduled for the first uplink grant and the second uplink grant to be transmitted on the overlapping time domain resource.

9. The method according to claim 6 or 8, wherein
the transmitting, on the overlapping time domain resource, the data that has been scheduled for the first uplink grant and the second uplink grant comprises:
performing physical layer processing on the data that has been scheduled for the first uplink grant and the second uplink grant; and
sending, over an air interface, the data that has been scheduled for the first uplink grant and the second uplink grant and that has undergone the physical layer processing.

10. The method according to any one of claims 5 to 9, wherein
the resource indicated by the first uplink grant corresponds to a first transport block, and the resource indicated by the second uplink grant corresponds to a second transport block.

11. The method according to claim 10, wherein
that a priority of the second uplink grant is higher than a priority of the first uplink grant comprises:
an end time for transmitting the second transport block over the air interface is earlier than an end time for transmitting the first transport block over the air interface.

12. The method according to any one of claims 5 to 11, further comprising:
when the part of data has been scheduled for the first uplink grant, suspending scheduling of the data on the resource indicated by the first uplink grant, and updating a scheduling context of the first uplink grant.

13. A computer program product, wherein
program code comprised in the computer program product is executed by a processor, to implement the method according to any one of claims 5 to 12.

## Patentansprüche

1. Datendispositionsvorrichtung, umfassend:
eine Schnittstelleneinheit, die zum Erhalten einer ersten Uplink-Freigabe und einer zweiten Uplink-Freigabe konfiguriert ist, wobei eine Ressource, die durch die erste Uplink-Freigabe angezeigt wird, sich in der Zeitdomäne mit einer Ressource überlappt, die durch die zweite Uplink-Freigabe angezeigt wird, und
eine Verarbeitungseinheit, die konfiguriert ist zum: Beginnen mit dem Disponieren von Daten auf der durch die erste Uplink-Freigabe angezeigten Ressource und Beginnen, wenn ein Teil der Daten für die erste Uplink-Freigabe disponiert wurde, mit dem Disponieren von Daten auf der durch die zweite Uplink-Freigabe angezeigten Ressource, wobei
die Verarbeitungseinheit ferner konfiguriert ist zum: Durchführen von Paralleldisposition für die erste Uplink-Freigabe und die zweite Uplink-Freigabe und Beginnen, wenn der Teil von Daten für die erste Uplink-Freigabe disponiert wurde, mit dem Disponieren der Daten auf der durch die zweite Uplink-Freigabe angezeigten Ressource basierend auf der Paralleldisposition, wobei
die Paralleldisposition eine Mehrzahl von Datendispositionsrunden umfasst und in einer Datendispositionsrunde ermöglicht wird, dass Teile von Daten für die erste Uplink-Freigabe bzw. die zweite Uplink-Freigabe disponiert werden.

2. Vorrichtung nach Anspruch 1, wobei:
die Verarbeitungseinheit ferner konfiguriert ist zum: Veranlassen, dass die Daten, die für die erste Uplink-Freigabe und die zweite Uplink-Freigabe disponiert wurden, auf der überlappenden Zeitdomänenressource übertragen werden, wenn in der Datendispositionsrunde die Teile von Daten für die erste Uplink-Freigabe bzw. die zweite Uplink-Freigabe disponiert wurden.

3. Vorrichtung nach Anspruch 1, wobei:
die Verarbeitungseinheit konfiguriert ist zum: Beginnen, wenn der Teil von Daten für die erste Uplink-Freigabe disponiert wurde, mit dem Disponieren der Daten auf der durch die zweite Uplink-Freigabe angezeigten Ressource basierend auf Prioritäten der Uplink-Freigaben, wobei
eine Priorität der zweiten Uplink-Freigabe höher als eine Priorität der ersten Uplink-Freigabe ist und ein Zeitpunkt zum Erhalten der zweiten Uplink-Freigabe später als ein Zeitpunkt zum Erhalten der ersten Uplink-Freigabe ist.

4. Vorrichtung nach Anspruch 3, wobei:
die Verarbeitungseinheit ferner konfiguriert ist zum: Veranlassen, dass die Daten, die für die erste Uplink-Freigabe und die zweite Uplink-Freigabe disponiert wurden, auf der überlappenden Zeitdomänenressource übertragen werden, wenn ein Teil der Daten oder alle Daten für die zweite Uplink-Freigabe disponiert wurden.

5. Datendispositionsverfahren, umfassend:
Erhalten (S10) einer ersten Uplink-Freigabe und einer zweiten Uplink-Freigabe, wobei eine Ressource, die durch die erste Uplink-Freigabe angezeigt wird, sich in der Zeitdomäne mit einer Ressource überlappt, die durch die zweite Uplink-Freigabe angezeigt wird,
Beginnen (S20) mit dem Disponieren von Daten auf der Ressource, die durch die erste Uplink-Freigabe angezeigt wird, und
Beginnen (S30) mit dem Disponieren von Daten auf der Ressource, die durch die zweite Uplink-Freigabe angezeigt wird, wenn ein Teil von Daten für die erste Uplink-Freigabe disponiert wurde, wobei
das Beginnen mit dem Disponieren von Daten auf der durch die zweite Uplink-Freigabe angezeigten Ressource, wenn ein Teil von Daten für die erste Uplink-Freigabe disponiert wurde, umfasst:
Durchführen von Paralleldisposition für die erste Uplink-Freigabe und die zweite Uplink-Freigabe und Beginnen, wenn der Teil von Daten für die erste Uplink-Freigabe disponiert wurde, mit dem Disponieren der Daten auf der durch die zweite Uplink-Freigabe angezeigten Ressource basierend auf der Paralleldisposition, wobei
die Paralleldisposition eine Mehrzahl von Datendispositionsrunden umfasst und in einer Datendispositionsrunde ermöglicht wird, dass Teile von Daten für die erste Uplink-Freigabe bzw. die zweite Uplink-Freigabe disponiert werden.

6. Verfahren nach Anspruch 5, ferner umfassend:
Veranlassen, dass die Daten, die für die erste Uplink-Freigabe und die zweite Uplink-Freigabe disponiert wurden, auf der überlappenden Zeitdomänenressource übertragen werden, wenn in der Datendispositionsrunde die Teile von Daten für die erste Uplink-Freigabe bzw. die zweite Uplink-Freigabe disponiert wurden.

7. Verfahren nach Anspruch 5, ferner umfassend:
das Beginnen mit dem Disponieren von Daten auf der durch die zweite Uplink-Freigabe angezeigten Ressource, wenn ein Teil von Daten für die erste Uplink-Freigabe disponiert wurde, umfasst:
Beginnen, wenn der Teil von Daten für die erste Uplink-Freigabe disponiert wurde, mit dem Disponieren der Daten auf der durch die zweite Uplink-Freigabe angezeigten Ressource basierend auf Prioritäten der Uplink-Freigaben, wobei
eine Priorität der zweiten Uplink-Freigabe höher als eine Priorität der ersten Uplink-Freigabe ist und ein Zeitpunkt zum Erhalten der zweiten Uplink-Freigabe später als ein Zeitpunkt zum Erhalten der ersten Uplink-Freigabe ist.

8. Verfahren nach Anspruch 7, ferner umfassend:
Veranlassen, dass die Daten, die für die erste Uplink-Freigabe und die zweite Uplink-Freigabe disponiert wurden, auf der überlappenden Zeitdomänenressource übertragen werden, wenn ein Teil der Daten oder alle Daten für die zweite Uplink-Freigabe disponiert wurden.

9. Verfahren nach Anspruch 6 oder 8, wobei
das Übertragen der Daten, die für die erste Uplink-Freigabe und die zweite Uplink-Freigabe disponiert wurden, auf der überlappenden Zeitdomänenressource umfasst:
Durchführen von Verarbeitung an den Daten, die für die erste Uplink-Freigabe und die zweite Uplink-Freigabe disponiert wurden, durch die physikalische Schicht; und
Senden der Daten, die für die erste Uplink-Freigabe und die zweite Uplink-Freigabe disponiert wurden und die die Verarbeitung durch die physikalische Schicht erfahren haben, über eine Luftschnittstelle.

10. Verfahren nach einem der Ansprüche 5 bis 9, wobei
die durch die erste Uplink-Freigabe angezeigte Ressource einem ersten Transportblock entspricht und die durch die zweite Uplink-Freigabe angezeigte Ressource einem zweiten Transportblock entspricht.

11. Verfahren nach Anspruch 10, wobei,
dass eine Priorität der zweiten Uplink-Freigabe höher als eine Priorität der ersten Uplink-Freigabe ist, umfasst, dass:
eine Endzeit für das Übertragen des zweiten Transportblocks über die Luftschnittstelle früher als eine Endzeit für das Übertragen des ersten Transportblocks über die Luftschnittstelle ist.

12. Verfahren nach einem der Ansprüche 5 bis 11, ferner umfassend:
Unterbrechen des Disponierens der Daten auf der durch die erste Uplink-Freigabe angezeigten Ressource und Aktualisieren eines Dispositionskontexts der ersten Uplink-Freigabe, wenn der Teil von Daten für die erste Uplink-Freigabe disponiert wurde.

13. Computerprogrammprodukt, wobei
Programmcode, der im Computerprogrammprodukt enthalten ist, von einem Prozessor ausgeführt wird, um das Verfahren nach einem der Ansprüche 5 bis 12 zu implementieren.

## Revendications

1. Appareil d'ordonnancement de données, comprenant :
une unité d'interface, configurée pour obtenir une première autorisation de liaison montante et une seconde autorisation de liaison montante, dans lequel une ressource indiquée par la première autorisation de liaison montante chevauche, en domaine de temps, une ressource indiquée par la seconde autorisation de liaison montante ; et
une unité de traitement, configurée pour : commencer un ordonnancement de données sur la ressource indiquée par la première autorisation de liaison montante, et commencer, lorsqu'une partie de données a été ordonnancée pour la première autorisation de liaison montante, l'ordonnancement de données sur la ressource indiquée par la seconde autorisation de liaison montante, dans lequel
l'unité de traitement est en outre configurée pour : réaliser un ordonnancement parallèle pour la première autorisation de liaison montante et la seconde autorisation de liaison montante, et, lorsque la partie de données a été ordonnancée pour la première autorisation de liaison montante, commencer, sur la base de l'ordonnancement parallèle, l'ordonnancement des données sur la ressource indiquée par la seconde autorisation de liaison montante, dans lequel
l'ordonnancement parallèle comprend une pluralité de cycles d'ordonnancement de données, et des parties de données peuvent être respectivement ordonnancées pour la première autorisation de liaison montante et la seconde autorisation de liaison montante dans un cycle d'ordonnancement de données.

2. Appareil selon la revendication 1, dans lequel
l'unité de traitement est en outre configurée pour : lorsque les parties de données ont été respectivement ordonnancées pour la première autorisation de liaison montante et la seconde autorisation de liaison montante dans le cycle d'ordonnancement de données, déclencher la transmission des données, qui ont été ordonnancées pour la première autorisation de liaison montante et la seconde autorisation de liaison montante, sur la ressource de domaine de temps en chevauchement.

3. Appareil selon la revendication 1, dans lequel
l'unité de traitement est configurée pour : lorsque la partie de données a été ordonnancée pour la première autorisation de liaison montante, commencer, sur la base de priorités des autorisations de liaison montante, l'ordonnancement des données sur la ressource indiquée par la seconde autorisation de liaison montante, dans lequel
une priorité de la seconde autorisation de liaison montante est plus élevée qu'une priorité de la première autorisation de liaison montante, et un temps pour obtenir la seconde autorisation de liaison montante est plus tard qu'un temps pour obtenir la première autorisation de liaison montante.

4. Appareil selon la revendication 3, dans lequel
l'unité de traitement est en outre configurée pour : lorsqu'une partie ou la totalité des données a été ordonnancée pour la seconde autorisation de liaison montante, déclencher la transmission des données, qui ont été ordonnancées pour la première autorisation de liaison montante et la seconde autorisation de liaison montante, sur la ressource de domaine de temps en chevauchement.

5. Procédé d'ordonnancement de données, comprenant :
l'obtention (S10) d'une première autorisation de liaison montante et d'une seconde autorisation de liaison montante, dans lequel une ressource indiquée par la première autorisation de liaison montante chevauche, en domaine de temps, une ressource indiquée par la seconde autorisation de liaison montante ;
le commencement (S20) d'un ordonnancement de données sur la ressource indiquée par la première autorisation de liaison montante ; et
le commencement (S30), lorsqu'une partie de données a été ordonnancée pour la première autorisation de liaison montante, de l'ordonnancement de données sur la ressource indiquée par la seconde autorisation de liaison montante, dans lequel
le commencement, lorsqu'une partie de données a été ordonnancée pour la première autorisation de liaison montante, de l'ordonnancement de données sur la ressource indiquée par la seconde autorisation de liaison montante comprend :
la réalisation d'un ordonnancement parallèle pour la première autorisation de liaison montante et la seconde autorisation de liaison montante, et lorsque la partie de données a été ordonnancée pour la première autorisation de liaison montante, le commencement, sur la base de l'ordonnancement parallèle, de l'ordonnancement des données sur la ressource indiquée par la seconde autorisation de liaison montante, dans lequel
l'ordonnancement parallèle comprend une pluralité de cycles d'ordonnancement de données, et des parties de données peuvent être respectivement ordonnancées pour la première autorisation de liaison montante et la seconde autorisation de liaison montante dans un cycle d'ordonnancement de données.

6. Procédé selon la revendication 5, comprenant en outre :
lorsque les parties de données ont été respectivement ordonnancées pour la première autorisation de liaison montante et la seconde autorisation de liaison montante dans le cycle d'ordonnancement de données, le déclenchement de la transmission des données, qui ont été ordonnancées pour la première autorisation de liaison montante et la seconde autorisation de liaison montante, sur la ressource de domaine de temps en chevauchement.

7. Procédé selon la revendication 5, comprenant en outre :
le commencement, lorsqu'une partie de données a été ordonnancée pour la première autorisation de liaison montante, de l'ordonnancement de données sur la ressource indiquée par la seconde autorisation de liaison montante comprend :
lorsque la partie de données a été ordonnancée pour la première autorisation de liaison montante, le commencement, sur la base de priorités des autorisations de liaison montante, de l'ordonnancement des données sur la ressource indiquée par la seconde autorisation de liaison montante, dans lequel
une priorité de la seconde autorisation de liaison montante est plus élevée qu'une priorité de la première autorisation de liaison montante, et un temps pour obtenir la seconde autorisation de liaison montante est plus tard qu'un temps pour obtenir la première autorisation de liaison montante.

8. Procédé selon la revendication 7, comprenant en outre :
lorsqu'une partie ou la totalité des données a été ordonnancée pour la seconde autorisation de liaison montante, le déclenchement de la transmission des données, qui ont été ordonnancées pour la première autorisation de liaison montante et la seconde autorisation de liaison montante, sur la ressource de domaine de temps en chevauchement.

9. Procédé selon la revendication 6 ou 8, dans lequel
la transmission, sur la ressource de domaine de temps en chevauchement, des données qui ont été ordonnancées pour la première autorisation de liaison montante et la seconde autorisation de liaison montante comprend :
la réalisation d'un traitement de couche physique sur les données qui ont été ordonnancées pour la première autorisation de liaison montante et la seconde autorisation de liaison montante ; et
l'envoi, par l'intermédiaire d'une interface radio, des données qui ont été ordonnancées pour la première autorisation de liaison montante et la seconde autorisation de liaison montante et qui ont subi le traitement de couche physique.

10. Procédé selon l'une quelconque des revendications 5 à 9, dans lequel
la ressource indiquée par la première autorisation de liaison montante correspond à un premier bloc de transport, et la ressource indiquée par la seconde autorisation de liaison montante correspond à un second bloc de transport.

11. Procédé selon la revendication 10, dans lequel
le fait qu'une priorité de la seconde autorisation de liaison montante est plus élevée qu'une priorité de la première autorisation de liaison montante comprend :
un temps de fin pour transmettre le second bloc de transport par l'intermédiaire de l'interface radio est plus tôt qu'un temps de fin pour transmettre le premier bloc de transport par l'intermédiaire de l'interface radio.

12. Procédé selon l'une quelconque des revendications 5 à 11, comprenant en outre :
lorsque la partie de données a été ordonnancée pour la première autorisation de liaison montante, la suspension de l'ordonnancement des données sur la ressource indiquée par la première autorisation de liaison montante, et la mise à jour d'un contexte d'ordonnancement de la première autorisation de liaison montante.

13. Produit programme d'ordinateur, dans lequel un code de programme compris dans le produit programme d'ordinateur est exécuté par un processeur, pour mettre en oeuvre le procédé selon l'une quelconque des revendications 5 à 12.
